(19) Europäisches Patentamt
European Patent Office
Office européen des brevets

(11) **EP 2 519 665 B1**

(12) **EUROPÄISCHE PATENTSCHRIFT**

(45) Veröffentlichungstag und Bekanntmachung des Hinweises auf die Patenterteilung:
**17.04.2019** Patentblatt **2019/16**

(51) Int Cl.:
*D01F 2/00* (2006.01)　　　*D01D 5/06* (2006.01)
*D01D 10/00* (2006.01)　　　*C08L 1/02* (2006.01)
*C08J 3/12* (2006.01)　　　*C08J 5/18* (2006.01)
*C08J 3/075* (2006.01)

(21) Anmeldenummer: **10810732.7**

(22) Anmeldetag: **15.12.2010**

(86) Internationale Anmeldenummer:
**PCT/AT2010/000479**

(87) Internationale Veröffentlichungsnummer:
**WO 2011/079331 (07.07.2011 Gazette 2011/27)**

(54) **FUNKTIONALISIERTER CELLULOSISCHER FORMKÖRPER UND VERFAHREN ZU SEINER HERSTELLUNG**

FUNCTIONALIZED MOLDED CELLULOSE BODY AND METHOD FOR PRODUCING THE SAME

CORPS MOULÉ CELLULOSIQUE FONCTIONNALISÉ ET PROCÉDÉ POUR LE RÉALISER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.12.2009  AT 20402009**

(43) Veröffentlichungstag der Anmeldung:
**07.11.2012** Patentblatt **2012/45**

(73) Patentinhaber: **Lenzing AG**
**4860 Lenzing (AT)**

(72) Erfinder:
• **SCHUSTER, Kurt, Christian**
**A-4840 Vöcklabruck (AT)**
• **ABU ROUS, Mohammad**
**1150 Wien (AT)**
• **HAINBUCHER, Karl, Michael**
**A-4861 Schörfling (AT)**
• **RICHARDT, Doris**
**A-4880 St. Georgen (AT)**
• **REDLINGER, Sigrid**
**A-4860 Lenzing (AT)**
• **FIRGO, Heinrich**
**A-4840 Vöcklabruck (AT)**
• **KRONER, Gert**
**A-4860 Lenzing (AT)**

(74) Vertreter: **Hanemann, Otto**
**Lenzing AG**
**Werkstraße 2**
**A-4860 Lenzing (AT)**

(56) Entgegenhaltungen:
**EP-A1- 1 438 975　　　EP-A1- 2 062 922**
**WO-A1-97/23668　　　WO-A1-2004/007818**
**WO-A1-2009/092121　　　WO-A1-2009/126980**
**US-A- 4 588 400　　　US-B2- 7 052 775**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 519 665 B1

**Beschreibung**

Die vorliegende Erfindung betrifft ein Verfahren zum Einbringen von Funktionssubstanzen mit geringer Imprägnierausbeute in einen Celluloseformkörper, wobei das Einbringen in einen niemals getrockneten Celluloseformkörper während seiner Herstellung nach der Formgebung ohne chemische Veränderung erfolgt. Sie stellt damit einen neuartigen Weg zur Funktionalisierung von Lyocellfasern dar, auf dem Funktionalitäten eingebaut werden können, die mit herkömmlichen Prozessen entweder gar nicht oder nur auf wesentlich aufwendigere Weise erreicht werden können.

Stand der Technik

Cellulosische Textilien und Fasern können auf verschiedene Weisen funktionalisiert oder chemisch modifiziert werden. So können beispielsweise Substanzen bei der Faserherstellung eingesponnen werden. Auch nach der Faserherstellung selbst kann noch während des Prozesses eine chemische Derivatisierung erfolgen; hierbei werden kovalente Bindungen hergestellt. Weiters kann die Faser mechanisch zu Zwischenstufen wie Garn, Gewebe, Gestrick oder Vlies oder zum fertigen Textil verarbeitet werden und am Ende oder während der Textilherstellung durch Prozesse wie Färben, Dämpfen, oder durch Aufbringen von Substanzen mittels Bindemitteln verändert werden.

Das Einspinnen setzt eine gute Verteilung des Zusatzstoffs voraus, damit die Spinnbarkeit im Prozess und ausreichende mechanische Fasereigenschaften des Endprodukts erhalten bleiben. Einzubringende Substanzen müssen also entweder in der Spinnmasse löslich oder in ausreichend kleinen Partikeln gleichmäßig und stabil dispergierbar sein. Weiters muss der Zusatzstoff unter den Prozessbedingungen und über die Verweilzeit im Prozess chemisch stabil sein. Beispiele im Lyocell-Verfahren sind die Herstellung von mattierten Fasern durch Zusatz von $TiO_2$-Pigment, die Herstellung von spinngefärbten Fasern mittels dispergiertem Ruß (Wendler et al. 2005) oder Einspinnen von Küpenfarbstoffen (Manian, A.P., Rüf, H, Bechtold, T., "Spun-Dyed Lyocell". Dyes and Pigments, 74 (2007) 519-524) die Herstellung von Fasern mit Ionenaustauschereigenschaften (Wendler F., Meister F., Heinze T., Studies on the Thermostability of Modified Lyocell Dopes. Macromolecular Symposia 223(1), PG: 213-224 (2005)) oder hoher Wassersorption mittels Superabsorbern (US 7052775).

Im Lyocell-Prozess kann das Lösungsmittel NMMO chemische Reaktionen auslösen, die empfindliche Substanzen zerstören können, aber auch die Spinnmasse selbst destabilisieren und zu Exothermien führen; z.B. sind sauer wirkende Stoffe in dieser Hinsicht gefährlich. Außerdem können flüchtige und wasserdampfflüchtige Substanzen im Filmtruder, in dem die Cellulose durch Wasserverdampfung im Vakuum in Lösung gebracht wird, abdampfen.

Zu den chemisch instabilen Substanzen zählen hydrolyselabile Stoffe wie Ester (z.B. Fette und Öle), Amide (z.B. Proteine) und alpha-glycosidisch gebundene Polysaccharide (z.B. Stärke); weiters oxidationsempfindliche Stoffe, die durch NMMO oxidiert werden (z.B. Antioxidantien und Vitamine).

Weiters gibt es Substanzen, die aus dem Spinnbad schwierig zu entfernen sind und daher die Lösungsmittelrückgewinnung erschweren. Ein Beispiel dafür sind Paraffine, die als unter anderem als Phasenwechselmaterialien (Phase Change Material; PCM) eingesetzt werden. Octadecan wird als Phase Change Material verwendet. Es kann durch Mikroverkapselung eingeschlossen werden und die Mikrokapseln können mittels Bindemittel auf textile Materialien aufgebracht werden. Weiters ist beschrieben, dass Octadecan oder ähnliche Materialien in Lyocell-Fasern als Mikrokapseln (EP1658395) oder in reiner Form eingesponnen werden können.

Eine jüngere japanische Patentanmeldung (JP 2008-303245) beschreibt das Einspinnen von Olivenöl in Viskose- und Cupro-Fasern mit antioxidanter Wirkung. Auch hier hat das Einspinnen den großen Nachteil, dass die Kreisläufe im Spinnprozess verunreinigt werden und dass die Fasereigenschaften im Vergleich zu ölfreien Fasern schlechtere mechanische Fasereigenschaften zeigen.

Es ist aus WO 2004/081279 bekannt, im Viscoseverfahren durch Einspinnen eines kationischen Polymers kationisierte Fasern herzustellen. Durch Einspinnen wurden auch bereits Lyocell-Folien mit polyDADMAC erzeugt (Yokota, Shingo; Kitaoka, Takuya; Wariishi, Hiroyuki, Surface morphology of cellulose films prepared by spin coating on silicon oxide substrates pretreated with cationic polyelectrolyte, Applied Surface Science (2007), 253(9), 4208-4214). Einspinnen in Lyocell ist also ebenfalls möglich, aber eine auf solche Weise funktionalisierte Faser zieht wie alle kationischen Substanzen aus dem Spinnbad Farbstoffe und andere Verunreinigungen heraus. Daher ergeben sich hier Probleme mit Verfärbungen, was einen großen Nachteil für das Endprodukt bedeutet.

Kationische Stärken wurden ebenfalls in Lyocell-Fasern eingesponnen (Nechwatal, A.; Michels, C.; Kosan, B.; Nicolai, M., Lyocell blend fibers with cationic starch: potential and properties, Cellulose (Dordrecht, Netherlands) (2004), 11(2), 265-272). Diese Substanzen wurden also alle durch Einspinnen eingebracht, nicht durch Nachbehandlung.

Die Auflösung von Proteinen ist schon im Lyocell-Basispatent von Johnson 1969 (GB 1144048) beschrieben. Zahlreiche weitere Patente zum Einspinnen von Proteinen existieren, z. B. WO 2002044278 und JP 2001003224. Die japanische Schrift beschreibt das Einspinnen von Milchprotein in Viskose. Wegen der hydrolytischen Aktivität des NMMO sind die Ausbeuten in praktischen Spinnprozessen aber gering und die Abbauprodukte verunreinigen das Spinnbad und erschweren die Lösungsmittelrückgewinnung. Außerdem ist bei biologisch aktiven Proteinen wie Enzymen ein unkontrollierter hydrolytischer Abbau oder eine strukturelle Veränderung oft aus Qualitätsgründen nicht akzeptabel.

Die Anwendung von Gelatine als biokompatibles Material ist vielfach beschrieben. (z.B. Talebian et al. 2007). Die Vorteile sind u.a. gute Quellung in Wasser, Biokompatibilität, biologische Abbaubarkeit, und nicht - sensibilisierendes Verhalten, weiters die niedrigen Kosten des Materials. Der Einsatz von Gelatine als Material ist jedoch durch die sehr begrenzte mechanische Belastbarkeit von Formkörpern, z. B. Filmen aus Gelatine eingeschränkt. Bekannte Lösungen dafür sind das Aufbringen von dünnen Schichten auf Trägern, und die Vernetzung z. B. mit bifunktionalen Aldehyden. Unser neuer Ansatz ist die Erzeugung einer Gelatine-haltigen Oberfläche durch den Einschluß von Gelatine in die Faserporen von Lyocell. Die mechanischen Eigenschaften des Verbundmaterials werden dabei von der Lyocell-Faser bestimmt, die biologischen der Faseroberfläche von der Gelatine. Es ist zwar z. B. aus EP 0878133 oder DE 1692203 bekannt, Gelatine in Nahrungsmittelhüllen und Verpackungsfolien aus Cellulose einzubringen. Aus der AT 007617 U1 ist bekannt, Gelatine durch Einspinnen in Viscosefasern einzubringen. Die Ausbeuten dieses Prozesses liegen nach AT 007617 U1 aber nur bei etwa 15-45 %, der Großteil der Gelatine geht also im Prozess verloren.

Weiters bekannt ist es aus der WO 97/07266, Gelatine in eine Spinnlösung zur Herstellung von Lyocellfasern einzubringen. Auch das Einbringen von nucleophilen Substanzen, z.B. Gelatine, im Spinnbad wird dort beansprucht, allerdings nicht näher beschrieben. Liegt Gelatine im Spinnbad vor, hat dies noch ähnliche Nachteile wie das direkte Einspinnen. Die Gelatine ist zwar weniger thermisch, aber durch den pH-Wert des Spinnbads und die hydrolytische Aktivität des 20 - 30 %-igen NMMO belastet. Außerdem wird der Lösungsmittelkreislauf mit Gelatine verunreinigt, was zu Schwierigkeiten bei der Lösungsmittel-Rückgewinnung führt.

In der EP 2062922A1 wird beschreiben, dass gegebenenfalls Additive einem Lösungssystem von Cellulose in ionischen oder protischen Lösungsmittel zugesetzt werden können.

Die WO 2004/007818 betrifft die Behandlung von cellulosichen Fornkörpern nach dem Aminoxidverfahren mit einem Chitosoniumpolymer welches in eienr Standardspinnlösung im wesentlichen vollständig löslich ist.

Die WO 2009/092121 betrifft die Behandlung eines cellulosischen Formkörpers mit einer alkalischen Dispersion, welche ungelöste Chitosanpartikel enthält.

Die Textiltechnik kennt eine weite Palette von Prozessen, bei denen cellulosische Textilien chemisch modifiziert werden. Farbstoffe werden beim Färben aus wässrigen Lösungen in die Faser eingebracht oder beim Drucken mittels Bindemittel auf dem Textil fixiert. Je nach chemischer Natur haftet der Farbstoff durch seine chemische Affinität zur Cellulose (Direktfarbstoffe), bildet durch eine Reaktion nach dem Eindringen in die Faser unlösliche Aggregate in der Faser (z.B. Küpenfarbstoffe), oder bildet kovalente chemische Bindungen mit der Cellulose aus (Reaktivfarbstoffe). Im

Zusammenhang mit der vorliegenden Erfindung sind insbesondere die Direktfarbstoffe relevant.

Das Einbringen von Direktfarbstoffen in cellulosische Textilien erfolgt im Prinzip durch Eintauchen des Textils in eine Lösung des Farbstoffs, optionales Erhitzen, und Trocknen des Textils. Die Bindung des Farbstoffs an die inneren Oberflächen der cellulosischen Faser wird durch starke nichtkovalente Wechselwirkungen bewirkt und erfordert keine chemische Reaktion. Die Eigenschaft der Farbstoffe, aus der Lösung bevorzugt in die Faser zu diffundieren und sich darin einzulagern, wird als Substantivität bezeichnet. Diese wirkt sich dahin gehend aus, dass die Verteilung des Farbstoffs zwischen Lösung und Faser stark auf der Seite der Faser liegt. Ein Maß für diese Verteilung ist der Verteilungskoeffizient, das Verhältnis von Farbstoffkonzentration im Substrat (Textil) zur Farbstoffkonzentration im Färbebad unter Bedingungen einer Auszugsfärbung im Gleichgewicht. Moleküle mit einem hohen Verteilungskoeffizient K zwischen Substrat und Lösung werden als hoch substantiv bezeichnet. Für den Verteilungskoeffizienten und damit als Maß für die Substantivität gilt:

$$K = D_f / D_s$$

wobei $D_f$ die Farbstoffkonzentration im Substrat [mmol/kg] und $D_s$ die Farbstoffkonzentration in der Lösung [mmol/L] ist. Für Direktfarbstoffe liegt dieser Verteilungskoeffizient K bei 10 bis 100 L/kg oder noch höher (Zollinger, H., Color Chemistry. 2nd, Revised Edition, Verlag Chemie, Weinheim, 1991).

Andere Funktionalitäten können durch die Synthese von Polymeren auf dem Textil selbst erreicht werden, z.B. eine Knitterfreiausrüstung, auch "Hochveredlung" oder "Harzausrüstung" genannt. In solche Harzausrüstungen können auch andere Substanzen eingeschlossen werden. Z. B. wurde das Seidenprotein Sericin durch eine Hochveredlung fixiert (A. Kongdee; T. Bechtold; L. Teufel, "Modification of cellulose fiber with silk sericin", Journal of Applied Polymer Science, 96 (2005) 1421-1428), und Chitosan auf Textilien aufgebracht. Ein Nachteil einer solchen Harzbindung ist, dass empfindliche Biomoleküle ihre Funktionalität verlieren, oder dass oberflächen-wirksame Substanzen durch den Einschluss in das Harz ihre Wirkung verlieren können. Der niemals getrocknete Zustand von Lyocellfasern ist der Zustand, in dem sich die Faser nach dem Spinnprozess, der Regeneration der Cellulose aus der Spinnlösung, und dem Auswaschen des Lösungsmittels NMMO vor dem ersten Trockenschritt befindet. Lyocellfasern im niemals getrockneten Zustand unterscheiden sich von solchen im getrockneten und wieder befeuchteten Zustand durch eine wesentlich höhere Porosität. Diese Porosität wurde bereits ausführlich charakterisiert (Weigel, P.; Fink, H. P.; Walenta, E.; Ganster, J.;

Remde, H. Structure formation of cellulose man-made fibers from amine oxide solution. Cellul. Chem. Technol. 31: 321-333; 1997; Fink, HP; Weigel, P; Purz, H. , Structure formation of regenerated cellulose materials from NMMO solutions. Prog. Polym. Sci. 26:1473; 2001; Vickers, M; NP Briggs, RI Ibbett, JJ Payne, SB Smith, Small-angle X-ray scattering studies on Lyocell fibers; Polymer 42 (2001), 8241-8242;). Ebenso ist die Wasseraufnahme der Faser im nie getrockneten Zustand höher. Andere Autoren berichten auch über eine starke Zunahme der Kristallinität beim Trocknen (Wei, M., Yang, G. et al, Holzforschung 63, 23-27 (2009)) aus der Auswertung von Röntgenweitwinkelstreuung.

Typische Eigenschaften der nie getrockneten und getrockneten Lyocell-Faser:

| Zustand | WRV | Kristallinität (2) | Orientie-rung als FWHM, in ° (1) | Cluster Durchmesser (nm) (3) | Mittl. Porendurchmesser, naß, nach SAXS (1) | Länge der Poren (1) |
|---|---|---|---|---|---|---|
| Nie getrocknet | 110 % | Ca. 15 % | 19° | 17 | 5,2 nm | 500 nm |
| 1 mal getrocknet | - | Ca. 55 % | 13° | 25 | - | 160 nm |
| 1 mal getrocknet (technisch) und wieder benetzt | 60 - 70 % | - | 24° | - | 2,7 nm | 40 nm |
| (1) aus Vickers et al. 2001. FWHM, Peakverbreiterung in der Röntgenkleinwinkelstreuung (full width at half maximum), ein Maß für die Orientierung  (2) aus Wei et al., 2009  (3) aus Fink et al.. 2001 | | | | | | |

Lyocell-Fasern im nie getrockneten Zustand (vor der ersten Trocknung) weisen eine hohe Zugänglichkeit für Wasser, aber auch für gelöste Moleküle auf. Dieser Umstand wird genutzt zur chemischen Modifikation. Kommerziell verwendete Beispiele sind Vernetzungsreaktionen zur Herstellung von fibrillationsarmen Fasern, mit NHDT (Rohrer, C.; Retzl, P.; Firgo, H., Lyocell LF - profile of a fibrillation-free fiber, Chem. Fibers Int. 50: 552,554-555; 2000) oder TAHT (P. Alwin , Taylor J., Melliand Textilberichte 82 (2001), 196). Die chemische Modifikation setzt voraus, dass die Reagenzien in die nie getrocknete Faser eindringen und die Reaktion unter Prozessbedingungen ausreichend schnell und vollständig abläuft, um die Reagenzien kovalent auf der Faser zu fixieren .

Gegenüber diesem Stand der Technik bestand daher die Aufgabe, ein Konzept bzw. ein Verfahren zur Verfügung zu stellen, mit dem Funktionalitäten in Cellulosefasern eingebaut werden können, die mit herkömmlichen Prozessen entweder gar nicht oder nur auf wesentlich aufwendigere Weise erreicht werden können.

Die Lösung dieser Aufgabe ist ein Verfahren zum Einbringen von Funktionssubstanzen in einen Celluloseformkörper, dadurch gekennzeichnet, dass das Einbringen in einen niemals getrockneten Celluloseformkörper während seiner Herstellung nach der Formgebung unter Beibehaltung der chemischen Struktur der Funktionssubstanz erfolgt. Es soll also keine Änderung der chemischen Struktur der Funktionssubstanz, beispielsweise durch Derivatisierung und ähnliche Vorgänge erfolgen.

Das erfindungsgemäße Verfahren ermöglicht es insbesondere erstmalig, Funktionssubstanzen mit einer geringen Imprägnierausbeute K', insbesondere einer Imprägnierausbeute K' kleiner als 10, bevorzugt kleiner als 5, dauerhaft in einen Celluloseformkörper einzubringen.

Farbstoffe haben üblicherweise eine chemische Struktur, die eine hohe Affinität zu dem zu färbenden Material ergibt, um eine hohe Ausbeute und Geschwindigkeit im Färbeprozess zu ermöglichen. In der Literatur über Farbstoffe wird die Affinität eines Farbstoffs zu einer Faser über den Verteilungskoeffizienten K beschrieben (H. Zollinger, Color Chemistry, VCH, 1991, S. 275). Es gilt: $K = D_f / D_s$, wobei $D_s$ die Gleichgewichtskonzentration in der Lösung (in g/l) und Df die Gleichgewichtskonzentration auf der Faser (g kg) ist. Der Wert K ist eine thermodynamische Größe.

Die für die Zwecke der hier beschriebenen Erfindung verwendete Imprägnierausbeute K' charakterisiert die Affinität einer Substanz zu einer angebotenen Faser. Sie gilt für die Kombination einer Substanz mit einer bestimmten Fasertype bei bestimmten Prozeßbedingungen, z.B. einer bestimmter Imprägnierzeit, hier 15 min., und Temperatur. Sie ist streng genommen eine kinetische Größe, da bei den verwendeten Imprägnierzeiten im Allgemeinen kein thermodynamisches Gleichgewicht erreicht wird.

Eine Imprägnierausbeute von genau 1,0 für eine bestimmte Substanz in einem bestimmten Lösungsmittel bei bestimmten Bedingungen bedeutet, dass sich die Substanz in gleicher Weise auf der Faser verteilt wie das Lösungsmittel selbst. Dagegen weist eine Imprägnierausbeute von kleiner 1,0 darauf hin, dass Ausschlußeffekte vorliegen, die Faser also eine größere Affinität zu dem Lösungsmittel (in vielen Fällen Wasser) zeigt als zu der Substanz. Umgekehrt weist eine Imprägnierausbeute von größer 1,0 darauf hin, dass die Faser eine stärkere Affinität zu der Substanz zeigt als zu dem Lösungsmittel. Farbstoffe zeigen daher unter den Bedingungen, bei denen sie angewendet werden (erhöhte Temperaturen über 80°C, Zusatz von Salzen) stets eine Imprägnierausbeute deutlich über 1,0, meist deutlich über 10 bis zu 100 und mehr, da sie möglichst vollständig auf die Faser aufziehen sollen. Hier einige Beispiele für die Imprägnierausbeute K' von gebräuchlichen Farbstoffen:

| Farbstoff | Imprägnierzeit | Temperatur | K' |
|---|---|---|---|
| Blau (Solophenylblau Marine BLE) | 15 min | 50° | 43 |
| Blau (Solophenylblau Marine BLE) | 15 min | 95° | 154 |
| Blau (Solophenylblau Marine BLE) | 60 min | 50° | 175 |
| Blau (Solophenylblau Marine BLE) | 60 min | 95°C | >200 |
| Rot (Sirius Scharlach BN) | 15 min | 95°C | >200 |
| Rot (Sirius Scharlach BN | 60 min | 95°C | >200 |
| Gelb (Sirius Lichtgelb GD) | 15 min | 95°C | >200 |
| Gelb (Sirius Lichtgelb GD) | 60 min | 95°C | >200 |

Die Vorgangsweise beim Färben zur Ermittlung der Imprägnierausbeute war folgende:
Getrocknete oder nie getrocknete (Feuchtegehalt 100%) Lyocell Fasern wurden im Flottenverhältnis 1:20 im Labomat Laborfärbeapparat (Fa. Mathis, Oberhasli/Zürich, Schweiz) mit 1,5 g/l des entsprechenden Farbstoffs behandelt. Dafür wurde die Flotte bis 55°C aufgeheizt, die Faserflocke zugegeben (kühlt dabei auf 50°C ab), für die angegebene Zeit behandelt. Danach wurde die Faserflocke abgetrennt, bei 3 bar abgepresst (ergibt eine Feuchte von ca. 100%), und die überstehende Flotte photometrisch auf Farbstoffgehalt analysiert. Bei der Behandlung bei 95°C wurde die Flotte auf 65°C vorgeheizt, die Faser zugegeben, mit 4°C / min aufgeheizt und die angegebene Zeit behandelt.

Funktionssubstanzen, für deren Aufbringung das erfindungsgemäße Verfahren besonders vorteilhaft ist, können unter anderem sein:
Hydrophobe (lipophile) Stoffe mit niedrigem oder hohem Molekulargewicht, z. B.

- Öle wie Olivenöl, Traubenkernöl, Sesamöl, Leinöl,
- Fette wie Kokosfett,
- Paraffine und andere Kohlenwasserstoffe,
- Wachse wie Wollwachs und seine Derivate, Bienenwachs, Carnaubawachs, Jojobaöl,
- Harze wie Schellack ,
- Öle, Fette, Wachse etc., die als Träger für fettlösliche Wirkstoffe dienen, z.B. für hautpflegende Vitamine, Ceramide,
- Flammhemmende Stoffe, die in organischen Lösungsmitteln löslich oder emulgierbar sind,
- Farbstoffe, die in speziellen Lösungsmitteln löslich sind, beispielsweise die sogenannten "High-VIS"-Farbstoffe
- Insektizide, z. B. Pyrethroide wie Permethrin.

Hydrophile, ungeladene Polymere, z. B.

- Neutrale Polysaccharide, z. B. Xylan, Mannan, Stärke und - Derivate.

Anionische Polymere, z. B.

- Polyacrylsäure, Polymethacrylsäure,
- Polysaccharide mit anionischen Gruppen wie Polygalacturonate (Pectin), Carrageenan, Hyaluronsäure.
- Anionische Derivate von neutralen Polymeren

Kationische Polymere, z. B.

- polyDADMAC, Polyaminosäuren, ...
- kationische Derivate von neutralen Polymeren, z B kationisierte Stärken

Proteine, z. B.

- Strukturproteine : Gelatine, Collagen, Milchproteine (Caseine, Molkeproteine)
- Enzyme
- Funktionelle Proteine

Kombinationen von Substanzen - komplexe Naturstoffe, z.B.

- Kosmetisch wirksame, wie Aloe vera, Traubenkernextrakt oder -öl, Antioxidante Gemische pflanzlichen Ursprungs, etherische Öle,
- Wellness-Präparate wie Ginseng.

Im erfindungsgemäßen Verfahren muss die Funktionssubstanz gelöst in einem geeigneten Lösungsmittel oder als Flüssigkeit emulgiert in einem geeigneten Emulsionsmedium vorliegen. Substanzen, die als feste Partikel vorliegen, lassen sich mit dem erfindungsgemäßen Verfahren nicht in einen Celluloseformkörper einbringen.

Grundsätzlich eignen sich alle Arten von Celluloseformkörpern für das erfindungsgemäße Verfahren. Bevorzugt werden Fasern, Folien oder Partikel auf diese Weise behandelt. Dabei sind als Fasern sowohl Endlosfilamente als auch geschnittene Stapelfasern mit herkömmlichen Abmessungen und Kurzfasern zu verstehen. Als Folien sind flächige Celluloseformkörper zu verstehen, wobei die Dicke dieser Folien grundsätzlich nicht begrenzt ist.

Die Formgebung erfolgt bevorzugt durch die Extrusion einer cellulosehaltigen Spinnlösung durch eine Extrusionsdüse, da auf diese Weise große Mengen der Celluloseformkörper mit sehr einheitlicher Form hergestellt werden können. Zur Herstellung von Fasern kommen dabei sowohl Verfahren mit herkömmlichen Abzugseinrichtungen nach der Extrusionsdüse als auch alternative Verfahren wie insbesondere Melt-Blowing-Verfahren in Frage. Zur Herstellung von Folien sind sowohl Schlitzdüsen zur Herstellung von Flachfolien als auch Ringschlitzdüsen zur Herstellung von Schlauchfolien verwendbar. Daneben sind jedoch auch andere Formgebungsverfahren anwendbar, wie beispielsweise Rakelverfahren zur Herstellung von Folien. Alle diese Verfahren sind dem Fachmann grundsätzlich bekannt.

Weitere mögliche Celluloseformkörper sind partikuläre Strukturen wie Granulat, sphärische Pulver oder Fibride. Die Herstellung von sphärischen Cellulosepulvern ausgehend von Granulat ist in WO 2009036480 (A1) beschrieben, jene von Fibrid-Suspensionen in WO2009036479 (A1). Solange diese Partikelsysteme sich im niemals getrockneten Zustand befinden, ist eine erfindungsgemäße Aufbringung von Aktivsubstanzen möglich.

Weitere mögliche Celluloseformkörper sind Spinnvliese ("melt blown"), Schwämme, Hydrogele und Aerogele.

Die Zugänglichkeit der inneren Struktur eines Celluloseformkörpers und damit die Imprägnierausbeute kann grundsätzlich durch die Herstellung eines poröseren Formkörpers erhöht werden. Methoden zur Erhöhung der Porosität sind dem Fachmann bekannt.

Besonders bevorzugt handelt es sich bei der cellulosehaltigen Spinnlösung um eine nach einem Direktlöseverfahren, besonders bevorzugt nach dem Lyocell-Verfahren hergestellte Spinnlösung. Die Herstellung einer solchen Spinnlösung ist dem Fachmann aus vielfältigen Veröffentlichungen der letzten Jahrzehnte grundsätzlich bekannt, unter anderem aus WO 93/19230. Dies stellt einen besonderen Vorteil der vorliegenden Erfindung im Vergleich zum Einspinnen von Funktionssubstanzen dar, da die bekannten Verfahren, insbesondere in den Bereichen Spinnlösungsherstellung und Lösemittelrückgewinnung nicht zur Anpassung an die Eigenschaften von Funktionssubstanzen aufwändig abgeändert werden müssen.

Das erfindungsgemäße Verfahren lässt sich auch auf Celluloseformkörpern anwenden, die im niemals getrockneten Zustand chemisch vernetzt werden, um beispielsweise im Falle von Lyocell-Fasern die Fibrillationsneigung zu verringern. Dabei kann das erfindungsgemäße Verfahren vor oder auch nach der chemischen Vernetzung durchgeführt werden. Ebenso eignet sich das erfindungsgemäße Verfahren zur Anwendung auf Celluloseformkörpern, die bereits eingesponnene Substanzen wie organische und anorganische Mattierungsmittel, Flammhemmer, etc. enthalten.

Erfindungsgemäß erfolgt das Einbringen nämlich zwischen dem Austritt des Celluloseformkörpers aus dem Fällbad und der Trocknung des so behandelten Celluloseformkörpers. Nur in diesem Bereich treten die einzubringenden Funktionssubstanzen im Verfahren auf. Die dabei notwendigen Stoffkreisläufe lassen sich sehr gut schließen und komplett von beispielsweise Brüdenkreisläufen bei der Spinnlösungsherstellung und Kreisläufen bei der Lösemittelrückgewinnung abtrennen. Außerdem werden die Funktionssubstanzen damit nicht hohen Temperaturen, niedrigen Drücken und anderen nachteiligen Bedingungen ausgesetzt. Damit werden wesentliche Probleme aus dem Stand der Technik gelöst.

Je nach der Eigenart der einzubringenden Funktionssubstanz ist an dieser Stelle im Verfahren auch das Einbringen nach einem Lösungsmittelaustausch einfach möglich. Auch dieser Lösungsmittelaustausch kann durch grundsätzlich bekannte Verfahrensschritte und Vorrichtungen erfolgen. In den erfindungsgemäßen Beispielen ist eine entsprechende Vorgehensweise exemplarisch beschrieben. Die Übertragung auf großtechnische Verfahrensweisen ist dem Fachmann problemlos und ohne weitere erfinderische Tätigkeit möglich.

Zur Fixierung der Funktionssubstanz im Celluloseformkörper kann dieser nach dem Einbringen der Funktionssubstanz bevorzugt gedämpft werden. Als Dämpfen ist erfindungsgemäß eine Behandlung bei erhöhter Temperatur in einer Dampfatmosphäre zu verstehen, insbesondere in einer Atmosphäre mit gesättigtem Wasserdampf bei entsprechender Temperatur, die vorzugsweise über 80°C liegt und nach oben nur durch die thermische Stabilität der beteiligten Substanzen, die Druckbeständigkeit der verwendeten Apparaturen sowie die Wirtschaftlichkeit begrenzt ist. Üblicherweise werden Temperaturen zwischen 90 und 120°C sinnvoll sein. Dieser Verfahrensschritt lässt sich einfach beispielsweise in einem entsprechenden, ggf. bereits vorhandenen Nachbehandlungsfeld auf der Faserstrecke durchführen.

Gegenstand der vorliegenden Erfindung ist auch ein Celluloseformkörper, der eine Funktionssubstanz mit einer Imprägnierausbeute K' kleiner als 10, bevorzugt kleiner als 5, enthält und der nach dem oben beschriebenen Verfahren hergestellt wurde.

Der wesentliche Unterschied zu einem Celluloseformkörper, in den die jeweils gleiche Funktionssubstanz gemäß dem Stand der Technik eingesponnen wurde, besteht darin, dass die Funktionssubstanz im erfindungsgemäßen Formkörper keine Veränderungen durch die im Herstellungsprozess auftretenden hohen Temperaturen bzw. durch die hydrolytische Aktivität des Lösungsmittels NMMO zeigt. Solche Veränderungen kann der Fachmann über charakteristische Abbauprodukte oder auch über chemische bzw. strukturelle Veränderungen an der Funktionssubstanz in dem fertigen Celluloseformkörper feststellen.

Der nach dem oben beschriebenen Verfahren herstellbare Celluloseformkörper weist eine stetige, nicht-konstante Verteilung der Konzentration der Funktionssubstanz mit dem Minimum in der Mitte des Formkörpers auf. Das bedeutet mit anderen Worten, dass die Konzentration der Funktionssubstanz im Inneren des Formkörpers kleiner ist als in dessen äußerster Schicht. Die Konzentration nimmt dabei nicht sprunghaft ab, wie dies beispielsweise bei einer nachträglichen Beschichtung der Fall wäre. Grundsätzlich ist überall im Querschnitt des Formkörpers, bis auf ggf. die Mitte des Formkörpers, Funktionssubstanz vorhanden. Lediglich aus der äußersten Schicht könnte die Funktionssubstanz in der Weiterverarbeitung ausgewaschen werden. Diese Verteilung der Funktionssubstanz ist typisch für den erfindungsgemäßen Formkörper und wird mit keinem der im Stand der Technik bekannten Verfahren erreicht.

Die Verteilung der Funktionssubstanz kann durch bekannte Methoden, bspw. durch photometrische Auswertung eines Dünnschicht-Mikrophotos oder durch ortsaufgelöste Spektroskopiemethoden wie EDAX oder ortsaufgelöste Raman-Spektroskopie an Querschnitten des erfindungsgemäßen Formkörpers festgestellt werden.

Bevorzugt weist die Funktionssubstanz eine Imprägnierausbeute K' kleiner als 10, bevorzugt kleiner als 5 auf.

Bevorzugt enthalten die erfindungsgemäßen Celluloseformkörper Funktionssubstanzen, die in NMMO nicht ausreichend stabil sind, die NMMO-Rückgewinnung stören oder die Spinnsicherheit beeinträchtigen, wie dies z. B. Öle tun.

Insbesondere bevorzugt sind die Funktionssubstanz in den erfindungsgemäßen Celluloseformkörpern ausgewählt aus der Stoffgruppe bestehend aus

a. Hydrophoben (lipophilen) Stoffen mit niedrigem oder hohem Molekulargewicht, z. B. Ölen wie Olivenöl, Traubenkernöl, Sesamöl, Leinöl, Fetten wie Kokosfett, Paraffinen und andere Kohlenwasserstoffen, Wachsen wie Wollwachs und seinen Derivaten, Bienenwachs, Carnaubawachs, Jojobaöl, Harzen wie Schellack , Ölen, Fetten, Wachsen etc., die als Träger für fettlösliche Wirkstoffe dienen, z.B. für hautpflegende Vitamine, Ceramide, flammhemmenden Stoffe, die in organischen Lösungsmitteln löslich oder emulgierbar sind, Farbstoffen, die in speziellen Lösungsmitteln löslich sind, beispielsweise die sogenannten "High-VIS"-Farbstoffe, Insektiziden, z. B. Pyrethroide wie Permethrin,

b. Hydrophilen, ungeladenen Polymeren, z.B. neutralen Polysacchariden, z. B. Xylan, Mannan, Stärke und deren Derivate,

c. Anionischen Polymeren, z.B. Polyacrylsäure, Polymethacrylsäure,

d. Polysacchariden mit anionischen Gruppen wie Polygalacturonate (Pectin), Carrageenan, Hyaluronsäure,

e. Anionischen Derivaten von neutralen Polymeren,

f. Kationischen Polymeren, z.B. polyDADMAC, Polyaminosäuren, ,kationische Derivate von neutralen Polymeren, z B kationisierte Stärken,

g. Proteinen, z.B. Strukturproteinen: Gelatine, Collagen, Milchproteine (Caseine, Molkeproteine), Enzymen oder funktionellen Proteinen,

h. Kombinationen von komplexen Naturstoffen, z.B. kosmetisch wirksamen, wie Aloe vera, Traubenkernextrakt oder -öl, antioxidanten Gemischen pflanzlichen Ursprungs, etherischen Ölen oder Wellness-Präparaten wie Ginseng.

Erfindungsgemäß können diese Formkörper zur Herstellung von Garnen, Textilien, Gelen oder Verbundwerkstoffen verwendet werden.

Die Erfindung ist sowohl in verschiedensten technischen Bereichen als auch in der Medizin und in Kosmetik und Wellness anwendbar.

In der Medizin werden Materialien zur Wundbehandlung und Wundheilung häufig aufgebaut aus einem Träger, der die mechanischen Eigenschaften bestimmt, und einem biokompatiblem Beschichtungsmaterial, das besonders verträglich mit der Haut und mit der Oberfläche der Wunde ist. Solche Verbundmaterialien sind durch die Erfindung auf relativ einfache Weise mit Lyocell-Fasern als Träger und eingeschlossenen Biomolekülen, z.B. Gelatine oder Hyaluronsäure herzustellen.

Als weitere Anwendung oder in Kombination mit wundverträglichen Materialien wie oben können pharmazeutische Wirkstoffe eingebunden werden, die langsam und kontrolliert freigesetzt werden.

Biokompatible Oberflächenmodifikationen von Faser- und Textilmaterialien oder Folien finden auch als Träger für das Wachstum von Zellkulturen, zur Herstellung von künstlichen Geweben als sogenannte "scaffolds", oder für die Besiedlung von Implantaten mit körpereigenen Zellen Anwendung.

Funktionelle Proteine wie Enzyme werden zur technischen Anwendung gemäß dem Stand der Technik häufig immobilisiert. Bei der chemischen Anbindung an einen Träger muss man oft mit Verlusten an Aktivität rechnen, wenn die Bindung zufällig in der Nähe des aktiven Zentrums erfolgt, oder die Struktur des Proteins durch die Reaktion zur Bindung verändert wird. Funktionelle Proteine und Enzyme können erfindungsgemäß durch Einschluss in die Poren einer niemals getrockneten Faser fest an ein textiles Trägermaterial gebunden werden. Dies stellt eine Möglichkeit dar, Proteine ohne kovalente chemische Bindung zu immobilisieren, wodurch auch die beschriebenen Nachteile der bekannten Immobilisierungsmethoden vermieden werden.

Wirkstoffe zur Herstellung von flammhemmenden Textilien werden gemäß dem Stand der Technik durch Einspinnen in Chemiefasern oder durch Ausrüstung des fertigen Textils fixiert. Substanzen, die in der Ausrüstung aufgebracht werden, sind häufig nicht lange waschbeständig. Manche flammhemmenden Mittel sind durch Einspinnen in Lyocell-Fasern nicht einzubringen, da sie die Lösungsmittelrückgewinnung stören. Für solche Stoffe, die in organischen Lösungsmitteln löslich sind, kann erfindungsgemäß eine Bindung durch Imprägnieren der Faser mit einer Lösung und Einschluss beim Trocknen erfolgen.

Die erfindungsgemäßen Formkörper können auch zur Herstellung gefärbter, insbesondere High-Vis-gefärbter Produkte verwendet werden. Composit-Fasern aus Cellulose und Proteinen sind erfindungsgemäß durch Einschluss von gelösten Proteinen in die niemals getrocknete Lyocell-Faser herstellbar.

Kosmetische Textilien stellen einen zunehmend interessanter werdenden Markt dar. Trockene Haut betrifft einen wachsenden Teil der Bevölkerung, da dieses Problem mit zunehmendem Alter häufiger auftritt. In der Kosmetik werden daher feuchthaltende Wirkstoffe eingesetzt, um den Zustand trockener Haut zu verbessern. Es gibt Hinweise, dass wasserbindende Fasern den Feuchtehaushalt der Haut verbessern können (Yao, L., Tokura H., Li Y., Newton E., Gobel M.D.I., J. Am. Acad. Dermatol. 55, 910-912 (2006)). Hier wirkte schon im Vergleich von Baumwolle und Polyester die Baumwolle deutlich positiv auf die Feuchte von trockener Haut. Stärker wasserbindende Textilien aus Lyocell mit zusätzlicher wasserbindender Funktionalität z.B. aus erfindungsgemäß eingebrachtem Milchprotein werden daher diesen Trend fortsetzen und verstärken.

Pflegende Öle sind bekannt für ihre positive Wirkung auf die Haut. Öle und Fette glätten und schützen die Haut (Lautenschläger, H., Fettstoffe - die Basis der Hautpflege. Kosmetische Praxis 2003 (6), 6-8). In der Kosmetik werden derzeit unter anderem z. B. Mandelöl und Traubenkernöl verwendet. Diese Öle können durch das erfindungsgemäße Verfahren in Lyocell-Fasern eingeschlossen werden und werden von dort langsam freigesetzt. Wollwachs enthält Cholesterin, das eine wichtige Barrierefunktion auf die Haut ausübt (Lautenschläger, H., Fettstoffe - die Basis der Hautpflege. Kosmetische Praxis 2003 (6), 6-8). Es ist in der kosmetischen Literatur auch beschrieben (Lautenschläger, H., Essentielle Fettsäuren- Kosmetik von innen und außen. Beauty Forum 2003(4), 54-56), dass Linolsäure aus Kosmetika in die Haut gebracht werden kann. Diese Substanz ist eine essentielle Fettsäure und wirkt gegen Barrierestörungen.

Auch die Rolle der Mikronährstoffe findet in den letzten Jahren zunehmend Beachtung. Laut Kugler 2006 (Kugler, H.-G., UV Schutz der Haut. CO-Med 2006 (3), 1-2) ist unbestritten, dass in den letzten Jahren die Intensität der UV-Strahlung zugenommen hat, was einen Mehrbedarf an Hautschutzmaßnahmen mit sich bringt. Dazu gehört ohne Zweifel eine entsprechende Hautschutzkleidung, Sonnenschutzmittel, aber eben auch eine sogenannte "innere Hautpflege" durch eine antioxidantien-reiche Ernährung und eine optimale Versorgung mit Mikronährstoffen.

Für die Gesundheit der Haut werden Mikronährstoffe als Nahrungsbestandteile als wichtig erkannt. Viele können durch die Haut aufgenommen werden. Mikronährstoffe werden in kosmetischen Präparaten zunehmend eingesetzt. Die Abgabe solcher Substanzen durch ein Textil stellt eine interessante Alternative zum Auftragen auf die Haut dar. Einerseits fällt der Vorgang des Auftragens weg. Andererseits ist die Abgabe über längere Zeiträume verteilt und kann so bei Stoffen, die in kleinen Mengen benötigt werden, besonders positive Effekte entfalten.

Radikalfänger sind interessante Produkte für den Wellnessbereich. Der Schutz der Zellen des menschlichen Körpers vor oxidativem Stress spielt für die Gesunderhaltung aller Organe, besonders aber der Haut eine bedeutende Rolle (Lautenschläger, H., Radikalfänger - Wirkstoffe im Umbruch. Kosmetische Praxis 2006 (2), 12-14). Von verschiedenen Vitamine (C, E, A), phenolischen Substanzen aus Pflanzen, aber auch bestimmten Proteine wie Gelatine werden antioxidative Wirkungen berichtet (http://www.gelita.com/DGF-deutsch/index.html) .

Mikronährstoffe werden mit der Milderung von Stress in Verbindung gebracht (Kugler, H.-G., Stress und Mikronährstoffe. Naturheilkunde 2 / 2007). Vor allem Aminosäuren sind hier besonders empfohlen. Proteinhaltige Fasern z. B. mit Milchprotein geben durch Hydrolyse langsam Aminosäuren ab und können daher einen Beitrag zur Mikroernährung der Haut leisten, was dem gesamten Organismus zuträglich ist.

**Beispiele:**

Die Erfindung soll nun anhand von Beispielen erläutert werden. Diese sind als mögliche Ausführungsformen der Erfindung zu verstehen. Keineswegs ist die Erfindung auf den Umfang dieser Beispiele eingeschränkt.

**Faserherstellung** :

Lyocell-Fasern wurden gemäß der Lehre von WO 93/19230 hergestellt und im niemals getrockneten, frisch ersponnenen Zustand verwendet.
Viscosefasern und Modalfasern wurden gemäß dem üblichen technischen Verfahren hergestellt (Götze, Chemiefasern nach dem Viscoseverfahren. Springer, Berlin, 1967).

**Trockengewichtsbestimmungen :**

"atro" bedeutet im Folgenden das Gewicht der Faser als absolute Trockenmasse nach Trocknung bei 105°C , 4 Stunden lang.

**Auflagen:**

Auflagen von Substanzen werden als Gewichts-% bezogen auf 100 % trockene Faser ausgedrückt
Auflage- Bestimmung durch Extraktion:
Die extrahierbaren Anteile wurden durch Soxhlet-Extraktion, wenn nicht anders angegeben, in Ethanol, aus der Faser entfernt und nach Verdampfen des Lösungsmittels gravimetrisch bestimmt.

**Dämpfen:**

wurde im Labordämpfer ((Type DHE 57596, Fa. Mathis, Oberhasli / Zürich, Schweiz) bei 100°C im Sattdampf durchgeführt.

**Wäschen der Faser- und Textilprodukte:**

"Simulierte Haushaltswäsche":
60°C, 30 min mit 1,3 g/l ECE Waschmittel in 700 ml Leitungswasser im Labomat Laborfärbeapparat (Type BFA 12, Fa. Mathis, Oberhasli / Zürich,
Schweiz). Bei wiederholten Wäschen wurden Zwischenspülungen unter fließendem hartem Wasser durchgeführt und die Fasern dann im Foulard bei 3 bar abgepresst.

"Alkalische Haushaltswäsche":
60°C, 30 min mit 1 g/l $Na_2CO_3$, Flottenverhältnis 1:50, im Labomat Laborfärbeapparat

**Wollfärbung:**

Rezeptur:

3 % Lanaset Marineblau (Farbstoff)
2 g/l Natriumacetat
5 % Natriumsulfat calz.
2 % Albegal SET
1 g/l Persoftal

4,5 - 5,0 pH (eingestellt mit Essigsäure)

Es wird bei 40-50°C mit allen Hilfsmitteln begonnen, 10 min laufen lassen. Dann Farbstoffzugabe, weitere 10 min färben, dann in 30-50 min auf 98 °C aufheizen (1,6 °C/min) und 20 - 40 min bei 98°C färben, kühlen auf 80°C, spülen. Die Farbtiefe (Intensität) der Wollfärbung wurde gemäß der CIELAB-Methode bestimmt.

**Standard-Vorgangsweise zur Bestimmung der "Imprägnierausbeute" einer Substanz**

Als Faserproben werden niemals getrocknete Lyocell-Fasern eingesetzt. Diese werden in einem Imprägnierbad im Flottenverhältnis 1:20 mit einer 5 %igen Lösung der Substanz in Wasser bzw. einer 5 %igen Emulsion in dem jeweils genannten Medium bei einer Temperatur von 50°C 15 min. lang nach Affinität der Funktionssubstanz wird für die Ermittlung der Imprägnierausbeute eine der beiden folgenden Methoden angewendet:

Methode 1: Nach 15min Imprägnierzeit wird photometrisch die Abnahme der Substanzkonzentration im Imprägnierbad gemessen. Diese Methode eignet sich für hoch affine Substanzen (K' etwa über 5), da hier eine deutliche Abnahme der Substanzkonzentration in der Lösung auftritt. Für Substanzen mit geringer Affinität zur Faser wäre die Differenz der Substanzkonzentration in der Lösung von und nach Imprägnierung zu gering, um sie verlässlich messen zu können. Daher wird in solchen Fällen eine zweite Methode angewendet. Die aus beiden Methoden erhaltenen Werte sind jedoch eindeutig vergleichbar.

Methode 2: Nach 15min Imprägnierzeit werden die imprägnierten Fasern aus dem Labomat genommen, im Foulard bei 3 bar abgepresst und anschließend die Feuchte der abgepressten Fasern bestimmt. Danach werden die abgepressten Fasern im Trockenschrank bei 105°C 4 Stunden lang getrocknet. Die Substanzkonzentration auf diesen trockenen Fasern werden mit einer passenden Methode bestimmt, z. B. für stickstoff-haltige Substanzen über eine Stickstoff-Analyse(beispielsweise Kjehldahl) und für Fette über Extraktion und gravimetrische Bestimmung des Extrakts. Diese Methode eignet sich auch für wenig affine Substanzen.

Grundsätzlich wäre es möglich, das Lösungsmittel, die Konzentration der angebotenen Substanz, die Temperatur und den zur Imprägnierung verwendeten Apparat zu verändern, um die Imprägnierausbeute bei praktischen Bedingungen zu ermitteln, falls bestimmte Substanzen bei den oben genannten Bedingungen nicht vorteilhaft zu imprägnieren sind.

Die Imprägnierausbeute K' wird mit folgender Formel berechnet:

$$K' = D_{ft} / D_{so} * 100 / F$$

wobei $D_{so}$ die Ausgangskonzentration in der Lösung (in g /kg), F die Gesamtauflage an Feuchte und Aktivsubstanz (in % bezogen auf das wobei $D_{so}$ die Ausgangskonzentration in der Lösung (in g /kg), F die Gesamtauflage an Feuchte und Aktivsubstanz (in % bezogen auf das trockene Fasergewicht als 100%) nach Abpressen und $D_{ft}$ die Konzentration auf der Faser (in g/kg) zum Zeitpunkt t (=15 min) ist.

Dabei wird $D_{ft}$ in Methode 1 berechnet aus der Konzentration der Lösung nach Imprägnierung:

$$D_{ft} = (D_{so} - D_{st}) * V_o$$

wobei $D_{so}$ die Ausgangskonzentration der Funktionssubstanz in der Lösung (in g/l), $V_o$ das Ausgangsvolumen der Lösung (in l) und $D_{st}$ die Konzentration der Funktionssubstanz zur Zeit t=15 min in der Lösung (in g/l) ist.

In Methode 2 wird $D_{ft}$ direkt aus der Konzentration auf der Faser (Auflage) bestimmt.

**Beispiel 1 : Bindung von Wachs aus Lösungsmittel**

Wollwachsalkohol ist ein Hydrolyseprodukt von Lanolin (Wollwachs), das die Alkohole des Wollwachses in reiner Form enthält. Die Fettsäuren, mit denen das native Wollwachs verestert ist, werden bei der Herstellung dabei weitgehend abgetrennt. Dadurch ist das Produkt besonders haltbar und stabil gegen hydrolytische Spaltung. Die verwendete Charge von Wollwachsalkohol (Lanowax EP, Fa. Parmentier, Frankfurt, DE) hatte folgende Eigenschaften: Schmelztemperatur 66°C; Verseifungszahl 2,3 mg KOH / kg; Säurezahl 0,97 mg KOH / g; Cholesterol 31,4 %; Asche 0,05 %. Laut Herstellerprospekt ist die Zusammensetzung von Wollwachsalkoholen in Pharma-Qualität folgendermaßen (Durchschnittswerte): Lanosterol und Dihydrolanosterol: 44,2 %; Cholesterol: 32,5 %; aliphatische Alkohole: 14,7 %; aliphatische Diole: 3,2 %; Kohlenwasserstoffe: 0,9 %; nicht identifiziert; 4,5 %.

50 g Trockengewicht einer niemals getrockneten Lyocell-Faser mit einem Titer von 1,3 dtex oder 6,7 dtex wurden ohne vorherigen Lösungsmittelaustausch mit einer Lösung von 10 % Wollwachsalkohol (Lanowax EP, Fa. Parmentier, Frankfurt, DE, Imprägnierausbeute K'=**0,74**) in Isopropanol in einem Flottenverhältnis von 1:20 über eine Zeitdauer von 10 min. behandelt. Dabei erfolgte der Lösungsmittelaustausch *in situ,* der Restgehalt an Wasser im gesamten Ansatz betrug rechnerisch 6,8 %. Die Fasern wurden durch Abpressen im Foulard bei 3 bar vom Überschuss der Wachslösung getrennt und 4 Stunden lang bei 105°C getrocknet. Die erhaltenen Fasern wurden 3 Wäschen bei 60°C (simulierte Haushaltswäsche) unterzogen. Der Wachsgehalt wurde gravimetrisch und durch Extraktion in Ethanol bestimmt.

Das Faserprodukt nach dem Trocknen war kaum verklebt und leicht zu öffnen.

Referenzproben von getrockneten Fasern mit 1,3 und 6,7 dtex wurden auf die gleiche Weise behandelt, nur dass die Fasern vor dem Imprägnieren bei 105 °C, 4 Stunden getrocknet wurden. Diese Proben zeigten aufgrund der deutlich geringeren Wachsauflage nach der dritten Wäsche eindeutig, dass die Waschbeständigkeit der erfindungsgemäß behandelten Fasern erheblich besser ist.

**Tabelle 1: Herstellung einer Wollwachsalkohol-haltigen Faser. Auflagen in % nach Extraktion.**

| Faser | 1,3 dtex | 6,7 dtex | 1,3 dtex | 6,7 dtex |
|---|---|---|---|---|
| Vorbehandlung | Nie getrocknet | Nie getrocknet | getrocknet | |
| Schritte | Auflage (%) | Auflage (%) | Auflage (%) | Auflage (%) |
| Nach Trocknen | 7,44 | 7,15 | 9,70 | 8,56 |
| Nach 2. Wäsche | 6,66 | 4,49 | - | - |
| Nach 3. Wäsche | 6,41 | 4,26 | 0,1 | 0,05 |
| Nach 3. W.-Färbung mit Rhodamin B | rot | rot | weiß | Weiß |

**Beispiel 2: Bindung von polyDADMAC**

Kationisierte Fasern werden z.B. als Filtrationsmittel hergestellt. Kationische Funktionen auf Cellulosefasern ermöglichen zusätzliche Färbeprozesse, die auf reiner Cellulose nicht erfolgreich sind, z.B. die Färbung mit sauren Wollfarbstoffen .

Das kationische Polymer polyDADMAC (poly

(Diallyldimethylammoniumchlorid), Sigma Prod. Nr. 522 376, extra low Molecular Weight, MW < 100.000, Imprägnierausbeute K'= 1,4 bei nie getrocknetem Lyocell, K'=1,14 bei getrocknetem Lyocell, K'= 0,87 bzw. 0,75 bei nie getrockneter bzw. getrockneter Viskose) wurde in einer 1 %-igen, wässrigen Lösung auf niemals getrocknete Fasern, getrocknete Fasern und Gestricke aufgebracht durch Imprägnierung (15 min. lang), Abpressen im Foulard bei 1 bar, 10 min Dämpfen bei 100°C im Sattdampf, 4 Stunden lang Trocknen bei 105°C. Die so erhaltenen Fasern wurden danach aviviert (Avivage B 306, 1:3 verdünnt, FV 1:20), getrocknet, kardiert, zum Garn versponnen und verstrickt. An den Gestricken wurde eine milde alkalische Vorwäsche ausgeführt.

Als Nachweis des Polymers diente eine Elementaranalyse auf Stickstoff und eine Wollfärbung der Fasern oder daraus hergestellter Gestricke. Die Farbtiefe wurde mittels CIELAB Methode bestimmt. Die Dunkelheit der Färbung wird aus der Luminanz L berechnet, wobei Dunkelheit = 100-L.

Die Beständigkeit der polyDADMAC-Auflage wurde einerseits auf der Faser, andererseits auf dem hergestellten Gestrick nach Wollfärbung (als Gesamt-Stickstoff aus polyDADMAC und Wollfarbstoff) jeweils nach 5 Haushaltswäschen durch photometrische Messung der Dunkelheit (=100-Helligkeit [L]) bestimmt (siehe Tabelle 2).

Zum Vergleich wurden bekannte wollfärbbare Fasern durch die gleiche Färbung behandelt. TENCEL® Referenz war eine kommerzielle 1,3 dtex / 39 mm Textiltype der Lenzing AG. "Rainbow" ist eine kationisierte Viscosefaser der Lenzing AG.

Die Farbintensität und auch die Waschbeständigkeit der TENCEL® Faser, die erfindungsgemäß mit polyDADMAC funktionalisiert worden war, lag also im Bereich von Wolle und "Rainbow"-Viscose. Dies zeigt zum einen die Vorteile des erfindungsgemäßen Verfahrens gegenüber einer Imprägnierung und zum anderen, wie auf einfache und wirkungsvolle Weise eine Cellulosefaser mit guter Eignung zur Mischung mit Wolle hergestellt werden kann.

**Tabelle 2:**

| Beispiel | Probe | Vor Waschen | | Nach 5 Wäschen | |
|---|---|---|---|---|---|
| | | % PolyDADMAC auf Faser | Dunkelheit | % PolyDADMA C auf Faser | Dunkelheit |
| 2.1 | TENCEL® nie getrocknet | 2,5 | 83,3 | 1,6 | 77,1 |
| 2.2 | Viskose nie getrocknet | 1,4 | 74,8 | 0,8 | 59,4 |
| 2.3 | Modal nie getrocknet | 0,9 | 66,9 | 0,4 | 46,9 |
| 2.4 | TENCEL® vorgetrocknet | 1,4 | 73,9 | 1 | 60,6 |
| 2.5 | Viskose vorgetrocknet | 1,2 | 71,9 | 0,7 | 57,1 |
| 2.6 | Modal vorgetrocknet | 1,1 | 66,3 | 0,5 | 47,3 |
| 2.7 | fertiges Gestrick TENCEL® | 0,8 | 72,2 | 0,5 | 61,9 |
| 2.8 | fertiges Gestrick Viskose | 1,3 | 72,2 | 0,8 | 66,7 |
| 2.9 | fertiges Gestrick Modal | 0,9 | 65,2 | 0,2 | 48,4 |
| 2.10 | TENCEL® Referenz | 0 | 32,8 | n.b. | n.b. |
| 2.11 | Rainbow | 0 | 84,9 | 0 | 80,2 |
| 2.12 | Wolle | 0 | 87,0 | 0 | 86,7 |

**Beispiel 3: Bindung von Ölen und Fetten nach Lösungsmittelaustausch**

Beispiel 3.1

Das verwendete Kokosfett (Ceres, Fa. VFI) hatte folgende Eigenschaften: Schmelzpunkt ca. 28°C

Zusammensetzung:  
gesättigte Fettsäuren: 92g  
einfach ungesättigte Fettsäuren 5g  
mehrfach ungesättigte Fettsäuren 2g  
trans-Fettsäuren 1g

Die Imprägnierausbeute K' für dieses Kokosfett, gemessen bei Imprägnierung nach Lösungsmittelaustausch in Ethanol, war 0,68. 39 g (atro) niemals getrocknete Lyocell-Fasern mit einem Titer von 1,3 dtex mit einem Wassergehalt von 91,7 g wurden in wasserfreiem Ethanol mit einem Flottenverhältnis von 1:50 4 h lang imprägniert und so das Wasser gegen Ethanol weitgehend ausgetauscht. Die so erhaltene Ethanol-feuchte Faser wurde abgeschleudert und mit einer Mischung von 40 Gew.% Kokosfett in Ethanol 72 h lang unter Schütteln imprägniert. Die verbliebene Faser wurde 2 h bei 60°C im Vakuum-Trockenschrank und anschließend 2 h bei 105°C im Trockenschrank bei Atmosphärendruck getrocknet. Die Faser wurde in der Waschmaschine im Wäschesack und mit zusätzlichen 2 kg Waschgut bei 60°C mit Waschmittel ohne optischen Aufheller (ECE-Farbechtheitstestwaschmittel) gewaschen und gewogen. Die Faser wurde über Nacht luftgetrocknet. Die Wäsche wurde noch 2x wiederholt (3 Wäschen). Der Fettgehalt wurde gravimetrisch und durch Extraktion bestimmt.

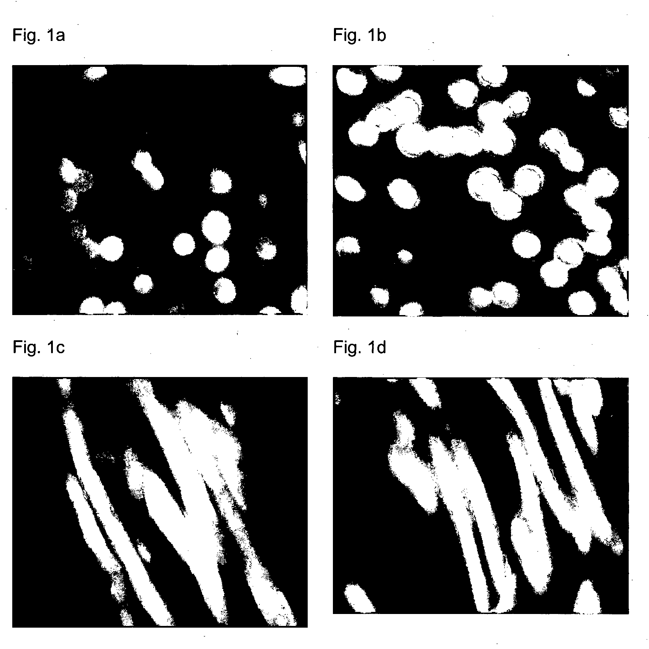

Von den Fasern vor den Wäschen und nach der 3. Wäsche wurde mittels Fluoreszenzmikroskopie nach Anfärbung mit Rhodamin B die Verteilung des Kokosfetts in/auf der Faser sichtbar gemacht. Die Verteilung war gleichmäßig über den Querschnitt und entlang der Faser (Fig. 1a - Fig. 1d).

Beispiel 3.2

79 g (atro) niemals getrocknete Lyocell-Faser mit Titer 1,3 dtex wurde 2 h in Ethanol (p.a.) mit einem Flottenverhältnis von 1:20 ins Ultraschallbad gestellt. In dieser Zeit stieg die Temperatur auf etwa 50°C an. Anschließend wurde mit einer Laborschleuder (1.475 U/min) 5 min lang zentrifugiert. Danach wurde die Faser mit einer 40%igen Kokosfett/Ethanol Mischung ebenfalls 2 h ins Ultraschallbad gestellt und 15 min mit der Laborschleuder zentrifugiert. Die Fasern wurden dann 2 h im Vakuumtrockenschrank bei 60°C und anschl. noch 2h im normalen Trockenschrank bei 105°C getrocknet. Die Fasern wurden dann 3x mit ECE- Farbechtheitswaschmittel bei 60°C im Wäschesack (mit ca. 2kg Begleitgewebe) gewaschen und bei 1.200U/min geschleudert.

Die Fasern wurden nach der Wäsche luftgetrocknet. Die Fettauflage vor und nach den Wäschen wurde durch Ethanolextraktion bestimmt.

Beispiel 3.3

Die Imprägnierausbeute K' für dieses Olivenöl, gemessen bei Imprägnierung nach Lösungsmittelaustausch in Ethanol, war 0,89. 78 g niemals getrocknete Lyocell-Fasern mit einem Titer von 1,3 dtex wurden in wasserfreiem Ethanol mit einem Flottenverhältnis von 1:20 im Ultraschallbad 2 h lang imprägniert und so das Wasser gegen Ethanol weitgehend ausgetauscht. Die so erhaltene Ethanol-feuchte Faser wurde mit einer Mischung von 40 Gew.% Olivenöl in Ethanol 2 h lang im Ultraschallbad imprägniert. Die Fasern wurden durch Abpressen im Foulard bei 3 bar vom Überschuss der Fettlösung getrennt und 2 h im Vakuumtrockenschrank, dann 2 h lang bei 105°C getrocknet. Die Faser wurde dann 3x mit ECE- Farbechtheitswaschmittel bei 60°C im Wäschesack (mit ca. 2 kg Begleitgewebe) gewaschen und bei 1.200U/min geschleudert. Die Fasern wurden nach der Wäsche luftgetrocknet. Der Fettgehalt wurde durch Ethanolextraktion bestimmt. Ergebnis siehe Tabelle 3.

### Tabelle 3: Eigenschaften der hergestellten Öl - und Fett- haltigen Fasern

| Beispiel | Substanz | Fett / Öl - Gehalt (% Auflage) | | Rhodamin B-Färbung |
|---|---|---|---|---|
| | | Vor Wäschen | Nach 3 Wäschen | |
| 3.1 | Kokosfett | 19 | 16 | Rot |
| 3.2 | Kokosfett | 18,5 | 17,6 | Rot |
| 3.3 | Olivenöl | 29,2 | 17,6 | Rot |
| 3.4 | Referenz unbehandelt | 0 | 0 | Weiß |

### Beispiel 4: Bindung von Paraffin nach doppeltem Lösungsmittelaustausch

100 g niemals getrocknete Lyocell-Fasern mit einem Titer von 1,3 dtex und einem Trockengehalt von 19 % wurden in wasserfreiem Ethanol mit einem Flottenverhältnis von 1:50 während 4 h imprägniert und abgeschleudert, und so das Wasser gegen Ethanol weitgehend ausgetauscht war. Ein zweiter Lösungsmittelaustausch mit Ethanol wurde mit einem Flottenverhältnis von 1:50 durchgeführt, danach ein Lösungsmittelaustausch mit Toluol im FV:1:50. Die so erhaltene Toluol-feuchte Faser wurde mit einer Lösung von 75 Gew.% 1:50 durchgeführt, danach ein Lösungsmittelaustausch mit Toluol im FV:1:50. Die so erhaltene Toluol-feuchte Faser wurde mit einer Lösung von 75 Gew.% Octadecan in Toluol 4 h lang bei 25°C imprägniert. Die Imprägnierausbeute in Toluol nach dem beschriebenen doppeltem Lösungsmittelaustausch war 0,18. Die Fasern wurden durch Abschleudern vom Überschuss der Octadecan-Toluol-Lösung getrennt und an der Luft getrocknet, dann 2 h bei 60°C, danach 2 h bei 120°C. Die erhaltenen Fasern wurden 3 Haushaltswäschen (Waschmaschine, 60°C , 30 Minuten lang, 2 kg Polyester-Begleitgewebe, mit Lufttrocknen nach jeder Wäsche) unterzogen. Der Octadecangehalt wurde zuerst gravimetrisch bestimmt und zusätzlich durch Extraktion in Toluol im Soxhlet- Extraktor die extrahierbare Octadecanmenge bestimmt. Es stellte sich heraus, dass nur Spuren von Octadecan extrahierbar waren. Nach Säurehydrolyse der Faser in 72,6 % $H_2SO_4$ bei 25°C wurde das Hydrolyseprodukt extrahiert und mittels Gaschromatographie analysiert, wodurch die Menge Octadecan bestimmt werden konnte, die tatsächlich innerhalb der Cellulosestruktur eingeschlossen warAP20060366).

### Tabelle 4: Faserdaten der Faser mit Octadecan

| Beispiel | Titer MW dtex | Titer CV % | FFk Mw | FFk CV % | FDk Mw % | Octadecan-Gehalt (%) | |
|---|---|---|---|---|---|---|---|
| | | | | | | Gravimetrisch | Nach Hydrolyse |
| 4.1 | 1,36 | 13 | 31,8 | 17 | 9,5 | 20 | 12,7 |
| 4.2 Referenz unbehandelt | 1,32 | 10 | 35,6 | 15 | 13,3 | 0 | 0 |

Es ist überraschend, dass auch nach einem doppelten Lösungsmittelaustausch und hoher erfindungsgemäßer Beladung mit einer Substanz, die der Cellulosestruktur fremd ist, gute mechanische Faserdaten erhalten bleiben.

**Beispiel 5: Bindung von Olivenöl aus Wasser/Ethanol-Emulsion**

Die Imprägnierausbeute K' für Olivenöl in Wasser/Ethanol-Emulsion wurde zu 0,33 bestimmt. 212 g niemals getrocknete Lyocell-Faser (Trockengewicht 100 g) mit einem Titer von 1,3 dtex wurden in einer Emulsion aus 1000g unterschiedlichen Bedingungen getrocknet und 3 simulierten Haushaltswäschen bei 60 °C mit Zwischenspülungen in hartem Wasser unterzogen (Bedingungen und Ergebnisse siehe Tabelle 5). Die im Labomat fixierten und bei 105°C über 4 h getrockneten Fasern wiesen bei einem Titer von 1,4 dtex eine Festigkeit von 25,9 cN/tex und eine Dehnung von 9,0 % auf.

**Tabelle 5: Binden von Olivenöl aus 50 %-iger Emulsion in Ethanol / Wasser**

| Behandlung | | | Auflage (%) | |
|---|---|---|---|---|
| Fixieren | | Trocknen | | |
| Gerät | Temp./Zeit | Temp./Zeit | nach Trocknen | nach 3 Wäschen |
| Ohne | - | 105° C / 4 h | 24,7 | 0,3 |
| Dämpfen | 100°C/ 5 min | 105° C / 4 h | 25,2 | 0,3 |
| Dämpfen | 80°C / 2 h | 105° C / 4 h | 27,2 | 1,9 |
| Dämpfen | 100°C / 1 h | 105° C / 4 h | 30,3 | 4 |
| Labomat | 130°C / 1 h | 25°C / 24 h | 31,9 | 0,5 |
| Labomat | 130°C / 1 h | 60°C / 18 h | 31,5 | 0,2 |
| Labomat | 130°C / 1 h | 105° C / 4 h | 32,6 | 11,7 |

Auch dieses Beispiel zeigt, dass erfindungsgemäß trotz hoher Beladung mit einer Substanz, die der Cellulosestruktur fremd ist, gute mechanische Faserdaten erhalten bleiben.

**Beispiel 6: Bindung von Olivenöl aus wässriger Emulsion**

Die Imprägnierausbeute K' für Olivenöl in wässriger Emulsion wurde zu 0,24 bestimmt. 207,3 g niemals getrocknete Lyocell-Faser (Trockengewicht 100 g) mit einem Titer von 1,3 dtex wurden in einer 1. Versuchsreihe (Beispiel 6.1 - 6.2) in einer Emulsion aus 1000g Olivenöl, 893 g Wasser, 60 g Emulator (Emulsogen T , Clariant) 15 min lang m Ultraschalbad bei 50 °C imprägniert, danach im Foulard bei 1 bar abgepresst. Die nasse Fasermasse wurde geteilt und bei verschiedenen Bedingungen fixiert. Danach wurden die Fasern bei verschiedenen Bedingungen getrocknet und 3 simulierten Haushaltswäschen bei 60 °C mit Zwischenspülungen in hartem Wasser unterzogen (Bedingungen und Ergebnisse siehe Tabelle 6a). Auch dieses Beispiel zeigt, dass auch bei hoher Beladung mit einer Substanz, die der Cellulosestruktur fremd ist, gute mechanische Faserdaten erhalten bleiben.

**Tabelle 6a: Binden von Olivenöl aus 50 %-iger Emulsion in Wasser**

| Behandlung | | | | | |
|---|---|---|---|---|---|
| | Fixieren | | Trocknen | Auflage (%) | |
| Beispiel | Gerät | Temp./Zeit | Temp./Zeit | nach Trocknen | nach 3 Wäschen |
| 6.1 | Dämpfer | 100°C/ 1 h | 105° C / 4 h | 38,2 | 6,5 |
| 6.2 | Labomat | 130°C / 1 h | 105° C / 4 h | 28,4 | 20,3 |

In einer 2. Versuchsreihe (Beispiel 6.3 - 6.8) wurden die wie oben beschrieben gedämpften oder im Labomat behandelten Proben vor dem ersten Trocknen einer Zwischenwäsche unterzogen (40°C, Wasser, Flottenverhältnis 1:50 mit mechanischer Bewegung), um den Überschuss an Öl zu entfernen. Die getrockneten Fasern waren dadurch leichter zu öffnen. Eine relativ hohe verbleibende Olivenöl-Auflage nach 3 Wäschen und damit eine gute Waschbeständigkeit zeigten nur die Beispiele 6.5 und 6.8, Diese Versuchsreihe zeigt den großen Einfluß einer gut abgestimmten Kombination

EP 2 519 665 B1

der Fixier- und Trocknungsbedingungen.

**Tabelle 6b: Binden von Olivenöl aus 50 %-iger Emulsion in Wasser mit Zwischenwäsche vor dem ersten Trocknen**

| | Fixieren | | Trocknen | Auflage (%) | |
|---|---|---|---|---|---|
| Beispiel | Gerät | Temp./Zeit | Temp./Zeit | nach Trocknen | nach 3 Wäschen |
| 6.3 | Dämpfer | 100°C / 10 min | 25°C / 24 h | 7,9 | 0,3 |
| 6.4 | Dämpfer | 100°C / 10 min | 60°C / 18 h | 9,9 | 0,3 |
| 6.5 | Dämpfer | 100°C / 10 min | 105° C / 4 h | 9,2 | 2,2 |
| 6.6 | Labomat | 130°C / 1 h | 25°C / 24 h | 13,4 | 0,3 |
| 6.7 | Labomat | 130°C / 1 h | 60°C / 18 h | 9,9 | 0,4 |
| 6.8 | Labomat | 130°C / 1 h | 105° C / 4 h | 11 | 6,4 |

**Beispiel 7: Bindung von Gelatine**

Gelatine ist ein Protein mit einer Molmasse von typischerweise ca. 15.000 bis 250.000 g /mol, das vornehmlich durch Hydrolyse des in Haut und Knochen von Tieren enthaltenen Collagens unter sauren Bedingungen (,Typ A-Gelatine') oder alkalischen Bedingungen (,Typ B-Gelatine') gewonnen wird. Collagen ist als Gerüstsubstanz in vielen tierischen Geweben enthalten. Natives Collagen hat eine Molmasse von etwa 360.000 g/mol.

In Wasser, besonders in der Wärme, quillt Gelatine zunächst stark auf und löst sich dann darin unter Bildung einer viskosen Lösung, die bei ca. 1 Gew.-% unterhalb von ca. 35° gallertartig erstarrt. Gelatine ist unlöslich in Ethanol, Ethern und Ketonen, löslich in Ethylenglykol, Glycerin, Formamid u. Essigsäure.

Collagen und Gelatine werden in der Medizin zum Modifizierung von Oberflächen verwendet, um diese biokompatibel zu machen. Solche Oberflächen sind jedoch sehr empfindlich. Durch das erfindungsgemäße Verfahren werden die mechanischen Eigenschaften der Cellulose mit der Biokompatibilität von Gelatineoberflächen kombiniert. Gerade für solche Anwendungen sind Folien als Formkörper sinnvoll. In der Kosmetik werden Collagen und seine Hydrolyseprodukte als Feuchtigkeitsgeber und als Hautschutzsubstanz verwendet.

Eine wichtige Eigenschaft von Gelatine ist, dass sie in Lösungen über etwa 60°C dünnflüssig ist (Sol-Zustand), beim Abkühlen aber in einen Gel-Zustand übergeht. Kommerziell erhältliche Gelatinetypen unterscheiden sich vor allem durch die Gelstärke, die in °Bloom gemessen wird, ein mechanisches Mass für das Eindringen eines Gewichts in das Gel. Die Gelstärke hängt mit dem (mittleren) Molekulargewicht der Gelatine zusammen. So entspricht eine Gelstärke von 50 bis 125 (Low Bloom) einer mittleren Molmasse von 20.000 bis 25.000, eine Gelstärke von 175 bis 225 (Medium Bloom) einer mittleren Molmasse von 40.000 bis 50.000 und eine Gelstärke von 225 bis 325 (High Bloom) einer mittleren Molmasse von 50.000 bis 100.000 (Angaben nach Sigma-Aldrich, 2008,für verschiedenen Gelatinetypen).

**Tabelle 7a: Eigenschaften der verwendeten Gelatinetypen**

| Bezeichnung | Hersteller | Produkt Nr. | Herkunft | Gelstärke |
|---|---|---|---|---|
| Speisegelatine | Gelita, DE | - | - | 60-80 |
| Niedrige Gelstärke | Fluka | 48720 | Schweinehaut | 60 |
| Mittelere Gelstärke | Fluka | 48722 | Schweinehaut | 170-190 |
| Hohe Gelstärke | Fluka | 48724 | Schweine haut | 240-270 |

Für alle verwendeten Gelatine-Typen wurden ein mittlerer Feuchtegehalt von 12 % bei Laborbedingungen (25 °C, 40 % Luftfeuchte) und ein Stickstoffgehalt von 18 % (absolut trocken) gemessen. Tabelle 7a zeigt weitere Eigenschaften dieser Gelatine-Typen.

Beispiel 7a: Einfluss der Trocknungstemperatur

108 g niemals getrocknete Lyocell-Fasern (bei 140 % Feuchte, Trockengewicht 45 g) mit Titer 1,3 dtex wurden mit einer Lösung von 10 % Gelatine "niedrige Gelstärke" in Wasser im Flottenverhältnis 1:20 bei 50 °C 15 min lang imprägniert. Diese Gelatine zeigte eine Imprägnierausbeute K' in Wasser von 0,46. Die Fasern wurden bei 1 bar im Foulard abgepresst und in einem verschlossenen Plastiksack bei 80°C 1 Stunde lang gedämpft. Danach wurden die Fasern in 3 Teile geteilt und bei unterschiedlichen Bedingungen getrocknet (Tabelle 7b). Um die überschüssige, nicht an die Faser gebundene Gelatine zu entfernen, wurden die trockenen Fasern mit Wasser (FV 1:50, 60°C, 30 min) im Labomat vorgewaschen und bei 60°C / 18 Stunden lang getrocknet. Danach wurde die Waschbeständigkeit durch 3 malige alkalische Wäsche geprüft. Die Gelatineauflage wurde durch Stickstoff-Elementaranalyse bestimmt. Ergebnis siehe Tabelle 7b.

**Tabelle 7b: Herstellung von Gelatine-haltigen Fasern (Bsp. 7a)**

| Beispiel | Dämpfen | Trocknen | | Gelatine Auflage | | | |
|---|---|---|---|---|---|---|---|
| | | Temperatur (°C) | Zeit (h) | nach Trocknen | nach Vorwäsche | 1.Wäsche | 3.Wäsche |
| 7a.1 | 80°C / 1 h | 60°C | 18 | n.b. | 8,3 | 1,09 | 0,65 |
| 7a.2 | 80°C / 1 h | 80°C | 4 | n.b. | 8,9 | 1,25 | 0,74 |
| 7a.3 | 80°C / 1 h | 105°C | 3 | n.b. | 7,7 | 1,38 | 0,97 |

Beispiel 7b: Einfluss der Bedingungen beim Dämpfen

125 g niemals getrocknete Lyocell-Fasern (bei 108 % Feuchte, Trockengewicht 60 g) mit Titer 1,3 dtex wurden mit einer Lösung von 20 % Gelatine "Speisegelatine" in Wasser im Flottenverhältnis 1:20 bei 60 °C 3 Stunden lang imprägniert. Diese Gelatine zeigte eine Imprägnierausbeute K' in Wasser von 0,31. Die Fasern wurden bei 1 bar im Foulard abgepresst und im Labordämpfer bei 100°C entweder 10 Minuten oder 1 Stunde lang gedämpft. Danach wurden die Fasern in Wasser ausgewaschen (FV 1:100, 40°C), um die überschüssige, nicht an die Faser gebundene Gelatine zu entfernen, und danach bei 105 °C 4 Stunden lang getrocknet. Dann wurden die trockenen Fasern mit Wasser (FV 1:50, 60°C, 30 min) im Labomat vorgewaschen und bei 60°C / 18 Stunden lang getrocknet. Danach wurde die Waschbeständigkeit durch 3malige alkalische Wäsche geprüft. Die Gelatineauflage wurde durch Stickstoff-Elementaranalyse bestimmt. Ergebnis siehe Tabelle 7c.

**Tabelle 7c: Herstellung von Gelatine-haltigen Fasern (Bsp. 7b)**

| Beispiel | Dämpfen | Trocknen | | Gelatine Auflage | | | |
|---|---|---|---|---|---|---|---|
| | | Temperatur (°C) | Zeit (h) | nach Trocknen | nach Vorwäsche | 1.Wäsche. | 3.Wäsche |
| 7b. 1 | 105°C / 10 min | 105 | 4 | 5,75 | 3,54 | 1,96 | 1,82 |
| 7b.2 | 105°C / 1 h | 105 | 4 | 14,49 | 7,03 | 3,39 | 2,99 |

Beispiel 7c: Einfluß der verschiedenen Gelatine-Typen

66 g niemals getrocknete Lyocell-Fasern (bei 120,4 % Feuchte, Trockengewicht 30 g) mit Titer 1,3 dtex wurden mit einer Lösung von 10 % oder 3 % Gelatine von verschiedenen Typen (Tabelle 7d) in Wasser im Flottenverhältnis 1:20 bei 60 °C 15 min lang imprägniert. Die Gelatine-Typen "Speisegelatine"; "niedrige Gelstärke"; "mittlere Gelstärke"; und "hohe Gelstärke zeigten Imprägnierausbeuten K' in Wasser von 0,31; 0,46; 0,78 und 0,71. Die Fasern wurden bei 3 bar im Foulard abgepresst und im Labordämpfer bei 100°C 10 Minuten lang gedämpft. Danach wurden die Fasern in Wasser ausgewaschen (FV 1:100, 40°C), um die überschüssige, nicht an die Faser gebundene Gelatine zu entfernen, und danach bei 105 °C 4 Stunden lang getrocknet. In diesem Beispiel wurden die getrockneten Fasern nicht mit Wasser vorgewaschen. Danach wurde die Waschbeständigkeit durch 3malige alkalische Wäsche geprüft. Die Gelatineauflage wurde durch Stickstoff-Elementaranalyse bestimmt. Ergebnisse siehe Tabelle 7d.

**Tabelle 7d:Herstellung von Gelatine-haltigen Fasern (Bsp. 7c).**

| Beispiel | Gelatinetype | Konzentration (%) | Dämpfen | Trocknen | | Gelatine Auflage | |
|---|---|---|---|---|---|---|---|
| | | | | Temperatur (°C) | Zeit (h) | nach Trocknen | 3.Wäsche |
| 7c. 1 | Speisegelatine | 10 | 100°C / 10 min | 105 | 4 | 2,92 | 1,24 |

(fortgesetzt)

| Beispiel | Gelatinetype | Konzentration (%) | Dämpfen | Trocknen | | Gelatine Auflage | |
|---|---|---|---|---|---|---|---|
| | | | | Temperatur (°C) | Zeit (h) | nach Trocknen | 3.Wäsche |
| 7c.2 | Niedrige Gelstärke | 10 | 100°C / 10 min | 105 | 4 | 0,93 | 0,45 |
| 7c.3 | Mittlere Gelstärke | 10 | 100°C / 10 min | 105 | 4 | 1,82 | 0,75 |
| 7c.4 | Hohe Gelstärke | 10 | 100°C / 10 min | 105 | 4 | 1,85 | 0,76 |
| 7c.5 | Speisegelatine | 3 | 100°C / 10 min | 105 | 4 | 2,49 | n.b. |

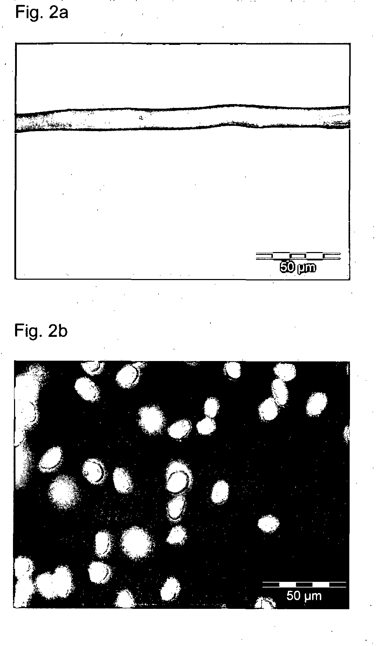

Zur Visualisierung der Verteilung der Gelatine auf und in der Faser wurde das Protein mittels FITC (Fluorescein - Isothiocyanat) selektiv gefärbt. Der Farbstoff bildet eine kovalente Bindung mit den Aminogruppen des Proteins. Die Figuren 2a und 2b zeigen exemplarisch für die Fasern aus Beispiel 7c.4, dass das Protein im ganzen Faserquerschnitt vorhanden und an der Oberfläche angereichert ist..

Zusammenfassend zeigt Beispiel 7, dass auch Gelatine durch das erfindungsgemäße Verfahren einerseits dauerhaft in der Faser fixiert wird und dass zum anderen durch die Anreicherung an der Oberfläche die für die Funktionalität notwendige Gelatinemenge gering gehalten werden kann.

**Beispiel 8: Bindung von Molkeprotein**

Molkeproteine werden aus Milch gewonnen. Sie sind der wasserlösliche, nicht aggregierte Anteil der Milchproteine und bestehen aus ca. 50 % $\beta$-Lactoglubulin, 20 % $\alpha$-Lactalbumin und einigen anderen Proteinen. Im Gegensatz zu den Caseinen bilden sie keine Micellen und haben relativ niedrige Molmassen im Bereich von 15.000 bis 25.000. Kommerziell erhältliche Milchproteine enthalten gewisse Mengen Milchzucker und kleine Anteile Milchfett.

208 g niemals getrocknete Lyocell-Fasern, (100 g atro bei 108,3% Feuchte, Typ 1,3 dtex/38mm) wurden mit einer 15 %-igen Lösung von Molkeprotein (Globulac 70 N, Meggle GmbH, Wasserburg/Deutschland, Proteingehalt > 70%, Imprägnierausbeute K'=0,23 gemessen in Wasser),10 min lang imprägniert bei 50°C. Nach Abpressen bei 3 bar im Foulard wurde das Faservlies geteilt. Die eine Hälfte wurde nicht gedämpft (Faser 8.1). Die andere Hälfte wurde bei 100°C gedämpft (5 min) (Faser 8.2). Die Fasern wurden in einem Becherglas mit Wasser ausgewaschen bei Flottenverhältnis 1:100 und 40°C. Die feuchten Fasern wurden aviviert mit 7,5g/l Avivage B 304 im FV 1:20. Danach wurden die Fasern bei 60°C getrocknet. Die trockenen Fasern waren leicht zu öffnen. Sie wurden kardiert, zu einem Garn versponnen und ein Gestrick hergestellt. Die Molkeprotein - Auflage wurde durch Stickstoff-Elementaranalyse bestimmt. Es wurde ein Stickstoffgehalt des Proteins von 15 % angenommen, wie er von Caseinen bekannt ist.

Die Ergebnisse sind in Tabelle 8 aufgeführt. Man erkennt deutlich, dass das Dämpfen auch hier eine Voraussetzung für eine Fixierung des Proteins auf der Faser ist, die zum einen einen höheren Gehalt an Funktionssubstanz in der Faser vor der weiteren Verarbeitung sicherstellt, zum anderen aber auch gravierende Verluste an Funktionssubstanz während der weiteren Verarbeitung in der textilen Kette sowie bei der Benutzung im Alltag verhindert. Der Proteingehalt der nicht gedämpften Faser lag nach der 6. Wäsche bereits unterhalb der Nachweisgrenze und konnte daher nicht bestimmt werden.

**Tabelle 8: Herstellung von Molkeprotein-haltigen Fasern**

| Schritt | Proteingehalt (Auflage auf Faser) | |
|---|---|---|
| | Faser 8.1 | Faser 8.2 |
| | nicht gedämpft | gedämpft |
| vor Avivierung | 0,75 | 4,04 |
| nach Avivierung | 0,17 | 3,47 |
| Gestrick | 0,08 | 1,68 |

(fortgesetzt)

| Schritt | Proteingehalt (Auflage auf Faser) | |
|---|---|---|
| | Faser 8.1 | Faser 8.2 |
| | nicht gedämpft | gedämpft |
| nach 3 Wäschen | 0,06 | 0,97 |
| nach 6 Wäschen | n.b. | 0,95 |

Zur Visualisierung der Verteilung des Molkeproteins auf und in der Faser wurde das Protein mittels FITC (Fluorescein - Isothiocyanat) selektiv gefärbt. Der Farbstoff bildet eine kovalente Bindung mit den Aminogruppen des Proteins.

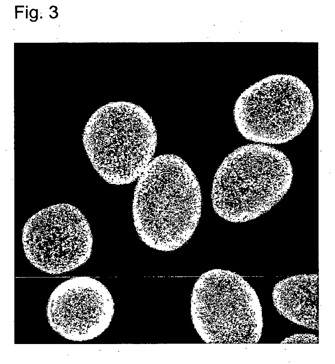

Fig. 3 zeigt exemplarisch für die Fasern aus Beispiel 8, dass das Protein im ganzen Faserquerschnitt vorhanden und an der Oberfläche angereichert ist..

**Beispiel 9: Bindung von Polyacrylsäuren**

Polyacrylsäure und Polymethacrylsäure sind hydrophile, wasserlösliche Polymere und werden in der Technik vielfach als Verdickungs-, Flockungs- und Dispergierhilfsmittel verwendet. Durch Pfropfreaktion von Acrylsäure auf Celluloseoberflächen können derivatisierte Cellulosefasern hergestellt werden, beispielsweise die kommerziell erhältliche "Deocell"-Faser, die Gerüche absorbieren soll. Diese Reaktionen sind jedoch technisch aufwändig und daher teuer durchzuführen.

Niemals getrocknete Lyocell-Fasern wurden 15 min lang im Ultraschallbad mit 25%iger wässriger Lösung der in Tabelle 9 jeweils genannten Acrylverbindung imprägniert, 20 min gedämpft bei 100°C, ausgewaschen mit 0,025 M $H_2SO_4$ bis der pH-Wert der Lösung leicht sauer war, dann 5 mal mit VE-Wasser gespült, anschließend 1 h bei 105°C und weiter 18 h bei 60°C getrocknet. Die Acrylverbindungen zeigten Imprägnierausbeuten K' in Wasser zwischen 0,52 (Molekulargewicht 9500) und 0,62 (Molekulargewicht 100.000). Die gebundene Menge Polymer wurde durch Titration der Carboxlgruppen zwischen pH 3,5 und pH 9 bestimmt. Die Waschbeständigkeit wurde durch 3-maliges Waschen (simulierte Haushaltswäsche) bestimmt. Die Ergebnisse sind in Tabelle 9 dargestellt.

Es konnten also Fasern hergestellt werden, die besonders bei höheren Molgewichten eine ähnliche Waschstabilität aufweisen wie Fasern, die durch Pfropfreaktion, d. h. durch Bildung einer kovalenten Bindung erhalten werden. An den so erhaltenen Fasern wurde die Wirksamkeit der Absorption von Gerüchen getestet. Dazu wurden Proben mit Ammoniaklösungen verschiedener Konzentration besprüht und anschließend die Geruchsintensität durch Riechen beurteilt. Die Geruchsintensität wurde in den tabellierten Abstufungen (0 = nicht bemerkbar, 5 = stark) angegeben.

**Tabelle 9: Ergebnis der Bindung von Polyacrylsäure bzw. Polymethacrylsäure**

| Probe | Auflage Als Gewichts% Carboxylgruppen | | | auf Faser titr. | Geruchsintensität bei | | | | |
|---|---|---|---|---|---|---|---|---|---|
| | Anfang | 3 Wäschen | Verlust | COOH | (mg NH3/g) | | | | |
| | % | % | % | % | 0,6 | 1,2 | 3 | 4,2 | 10,2 |
| Lyocell Referenz 1,3 dtex unbehandelt | 0 | 0 | 0 | 0 | 5 | n.b. | n.b. | n.b. | n.b. |
| Deocell (kommerziell, durch Propfreaktion) | 7,7 | 5,0 | 34 | 7,7 | 0 | 0 | 0 | 0 | 0 |
| Polymethacrylsäure-Na-Salz MG 9500 | 1,2 | 0,5 | 62 | 1,2 | 0 | n.b. | 2 | n.b. | n.b. |
| Polyacrylsäure MG ca.5000 teilweises Salz | 0,9 | 0,4 | 54 | 0,9 | 0 | n.b. | 3,5 | n.b. | n.b. |
| Polyacrylsäure Na-Salz MG ca. 15000 | 1,3 | 0,5 | 61 | 1,3 | 0 | n.b. | 2,5 | n.b. | n.b. |

(fortgesetzt)

| Probe | Auflage Als Gewichts% Carboxylgruppen | | | auf Faser titr. | Geruchsintensität bei | | | | |
|---|---|---|---|---|---|---|---|---|---|
| | Anfang | 3 Wäschen | Verlust | COOH | *(mg NH3/g)* | | | | |
| | % | % | % | % | 0,6 | 1,2 | 3 | 4,2 | 10,2 |
| Polyacrylsäure MG ca.100000 | 2,8 | 1,5 | 47 | 2,8 | 0 | n.b. | 0 | 2 | 2 |
| Polyacrylsäure MG ca.250000 | 1,4 | 0,9 | 32 | 1,4 | 0 | n.b. | 2 | n.b. | n.b. |

**Beispiel 10 : "Slow-release" Versuch mit Vitamin E in Wachs**

Analog Beispiel 1 wurden 50 g Trockengewicht einer niemals getrockneten Lyocell-Faser mit einem Titer von 1,3 dtex oder 6,7 dtex ohne vorherigen Lösungsmittelaustausch mit einer Lösung von 10 % Wollwachsalkohol (Lanowax EP, Fa. Parmentier, Frankfurt, DE) in Isopropanol in einem Flottenverhältnis von 1:20 über eine Zeitdauer von 10 min. behandelt. Die Wachslösung war in diesem Fall jedoch mit 5,33 mg / kg Tocopherolacetat (Vitamin E-Acetat) bezogen auf Wachs angereichert. Dabei erfolgte der Lösungsmittelaustausch *in situ,* der Restgehalt an Wasser im gesamten Ansatz betrug rechnerisch 6,8 %. Die Fasern wurden durch Abpressen im Foulard bei 3 bar vom Überschuss der Wachslösung getrennt und 4 Stunden lang bei 105°C getrocknet. Die erhaltenen Fasern wurden 3 Wäschen bei 60°C (simulierte Haushaltswäsche) unterzogen. Der Wachsgehalt wurde gravimetrisch und durch Extraktion in Ethanol bestimmt. Die Vitamin E-Acetat-Bestimmung erfolgte aus dem Extrakt mittels HPLC.

**Tabelle 10: Herstellung einer Wollwachsalkohol-haltigen Faser. Auflagen in % nach Extraktion.**

| Faser | Faser 1,3 dtex | | | Faser 6,7 dtex | | |
|---|---|---|---|---|---|---|
| Vorbehandlung | Nie getrocknet | | | Nie getrocknet | | |
| Schritte | Auflage (%) | Vitamin E (mg/kg Faser) | Vit E Ausbeute % bez. Einsatz (Wachs) | Auflage (%) | Vitamin E-Acetat (mg/kg Faser) | Vitamin E-Acetat Ausbeute % bez. Einsatz (Wachs) |
| Nach Trocknen | 7,4 | 328 | 83 | 7,1 | 293 | 77 |
| Nach 2. Wäsche | 6,7 | 209, | 61 | 4,5 | 129 | 54 |
| Nach 3. Wäsche | 6,4 | 188, | 52 | 4,3 | 113 | 50 |
| Nach 3. W.-Färbung mit Rhodamin B | rot | | | rot | | |

Dabei konnte festgestellt werden, dass das Vitamin E-Acetat mit dem Wachs zusammen in der Faser festgehalten wird, beim Waschen die Beladung an Vitamin E-Acetat jedoch sinkt. Daraus kann geschlossen werden, dass diese Methode verwendet werden kann, um fettlösliche hautpflegende Wirkstoffe in einem Träger aus Wachs in der Faser einzubringen, die anschließend langsam aus der Wachs-Faser-Matrix freigesetzt werden. Wahrscheinlich bildet das Wachs in der Faser lipophile Nanokapseln aus. Die Faser ist also ein System zur kontrollierten Wirkstoffabgabe (sogenanntes "slow release" - System).

Auf diese Weise ist sogar ein mehrfaches Be- und Entladen von Fasern mit Funktionsstoffen, beispielsweise mit Vitaminen oder Duftstoffen, möglich.

**Beispiel 11: Bindung von Permethrin aus Lösungsmittel**

Permethrin ist ein synthetisches Insektizid aus der Gruppe der Pyrethroide. Es findet wegen der breiten Wirksamkeit gegen Insekten und der geringen Giftigkeit für warmblütige Organismen einschließlich des Menschen weite Anwendung. In Textilien wird Permethrin z.B. als Fraßschutz gegen Motten (Teppiche) und auf Bekleidung zum Schutz vor Krankheitsüberträgern (Vektoren) wie Steckmücken und Zecken.

Permethrin wurde in niemals getrocknete Lyocell-Fasern auf zwei verschiedene Arten eingebracht: Mit vorhergehendem Lösungsmittelaustausch und direkt auf die wasserhaltigen nie getrockneten Fasern.

Beispiel 11a) Mit Lösungsmittelaustausch in situ

15 g Trockengewicht einer niemals getrockneten Lyocellfaser mit einem Titer von 1,3 dtex wurde ohne vorherigen Lösungsmittelaustausch mit einer Lösung von 2 % bzw. 5 % Permethrin (P100 von Thor Chemie (Speyer, DE)) in Isopropanol in einem Flottenverhältnis von 1:20 bei Raumtemperatur 15 Minuten lang behandelt. Dabei erfolgte der Lösungsmittelaustausch in situ. Der Restgehalt an Wasser im gesamten Ansatz betrug rechnerisch 5,7 %. Die Faser wurde durch Abpressen im Foulard bei 3 bar vom Überschuss der Permethrinlösung getrennt und bei 105°C 4 Stunden lang bzw . bei 60°C 18 Stunden lang getrocknet. Die erhaltenen Fasern wurden simulierten Haushaltswäschen unterzogen.
Die Auflage an Permethrin wurde anschließend durch Extraktion in Ethanol (Soxhlet) und anschließende HPLC-Analyse bestimmt.

**Tabelle 11a: Herstellung einer Permethrin-hältigen Faser ohne vorhergehenden Lösungsmittelaustausch**

| Versuch | 11.1 | 11.2 | 11.3 | 11.4 |
|---|---|---|---|---|
| Konzentration Permethrin (%) | 2 | 2 | 5 | 5 |
| Trocknung | 60°C / 18 h | 105°C / 4 h | 60°C / 18 h | 105°C / 4 h |
| Auflage (%) | 2,05 | 2,16 | 4,68 | 4,31 |
| Imprägnierausbeute | 1,03 | 1,08 | 0,94 | 0,86 |
| | | | | |
| Auflage nach 1 Wäsche (%) | 1,80 | 1,99 | 2,91 | 2,67 |
| Auflage nach 10 Wäschen | 1,60 | 1,50 | n.b. | n.b. |
| Auflage nach 50 Wäschen | 0,82 | 1,13 | n.b. | n.b. |

Beispiel 11b) Mit vorhergehendem Lösungsmittelaustausch

20 g Trockengewicht einer niemals getrockneten Lyocellfaser mit einem Titer von 1,3 dtex wurden mit 400 ml Isopropanol 1 Stunde lang für den Lösungsmittelaustausch behandelt. Der Überschuß an Lösungsmittel wurde im Foulard bei 3 bar abgepressst.
Anschließend wurde mit einer Lösung von 2 % bzw. 5 % Permethrin (P100 von Thor Chemie (Speyer, Deutschland)) in Isopropanol in einem Flottenverhältnis von 1:20 bei Raumtemperatur 15 Minuten lang behandelt. Die Faser wurde durch Abpressen im Foulard bei 3 bar vom Überschuss der Permethrinlösung getrennt und bei 105°C 4 Stunden lang bzw . bei 60°C 18 Stunden lang getrocknet. Die erhaltenen Fasern wurden simulierten Haushaltswäschen unterzogen.
Die Auflage an Permethrin wurde durch Extraktion in Ethanol (Soxhlet) und anschließender HPLC-Analyse bestimmt.

**Tabelle 11b: Herstellung einer Permethrin-hältigen Faser mit vorhergehendem Lösungsmittelaustausch**

| Versuch | 11.5 | 11.6 |
|---|---|---|
| Konzentration Permethrin (%) | 2 | 5 |
| Trocknung | 60°C / 18 h | 60°C / 18 h |
| Auflage (%) | 1,78 | 4,53 |
| Imprägnierausbeute | 0,89 | 0,91 |
| Auflage nach 1 Wäsche | 1,02 | 3,47 |

Im technischen Maßstab kann dieses Verfahren z.B. in einem Flockenfärbeapparat durchgeführt werden.

**Beispiel 12: Modifikation von Cellulose-Granulaten und -Pulvern**

Neben der bereits ausführlich beschriebenen Funktionalisierung von Cellulosefasern nach der erfindungsgemäßen Methode wurden auch Cellulosegranulate bzw. -pulver behandelt. Die Herstellung des Granulats bzw. Pulvers folgte dabei entsprechend der in WO 2009/036480 beschriebenen Methode. Die Funktionalisierung erfolgte analog zu Beispiel 2 mit polyDADMAC, d.h. es wurde zuerst imprägniert, dann gedämpft und die Probe danach getrocknet. Diese trockene Probe wurde schwach alkalisch gewaschen, mit Wasser nachgewaschen und erneut getrocknet. Als Ausgangsmaterial wurde in Versuch 12.1 niemals getrocknetes Cellulosegranulat (Partikelgröße ca. 1-2mm) und in Versuch 12.2 bereits getrocknetes und gemahlenes Pulver ($x_{50}$=50$\mu$m, $x_{90}$=120$\mu$m) verwendet. Für Versuch 12.3 wurde das beladene Granulat aus Versuch 12.1 getrocknet und mittels einer Prallmühle (UPZ 100, Hosokawa Alpine) ebenfalls zu Pulver vermahlen, wobei ein Pulver mit $x_{50}$=60$\mu$m und $x_{90}$=125$\mu$m entstand. Die Beladung der jeweils entstandenen Partikel mit polyDADMAC wurde, wie in Beispiel 2 beschrieben, über den Stickstoffgehalt gemessen. Die Ergebnisse sind in Tabelle 12 zusammengefasst. Wasch- oder Färbeversuche, die mit denen an Fasern vergleichbar gewesen wären, wurden am Granulat bzw. Pulver nicht durchgeführt. Es ist deutlich zu erkennen, dass auf das niemals getrocknete Cellulosegranulat erheblich mehr polyDADMAC aufgebracht werden kann als auf ein bereits getrocknetes Cellulosepulver. Der polyDADMAC-Gehalt bleibt auch unverändert hoch, wenn das Granulat getrocknet und gemahlen wird.

**Tabelle 12: Modifikation von Cellulose-Granulaten und -Pulvern**

| Versuch | polyDADMAC-Gehalt auf Partikeln [%] |
|---------|-------------------------------------|
| 12.1    | 3,4                                 |
| 12.2    | 1,8                                 |
| 12.3    | 3,4                                 |

**Patentansprüche**

1.  Verfahren zur Herstellung eines Celluloseformkörpers umfassend die Schritte

    - Ausformen einer cellulosehaltigen Lösung
    - Ausfällen der ausgeformten Lösung
    - Waschen des so erhaltenen Formkörpers und
    - Trocknen des Formkörpers,

    **dadurch gekennzeichnet, dass** eine Funktionssubstanz in den niemals getrockneten Celluloseformkörper während seiner Herstellung nach der Formgebung unter Beibehaltung der chemischen Struktur der Funktionssubstanz eingebracht wird, wobei die Funktionssubstanz eine entsprechend in der Beschreibung definierte Imprägnierausbeute K' aufweist, die kleiner als 10, bevorzugt kleiner als 5 ist.

2.  Verfahren gemäß Anspruch 1, **dadurch gekennzeichnet, dass** die cellulosehaltige Lösung nach einem Direktlöseverfahren hergestellt ist.

3.  Verfahren gemäß einem der vorgehenden Ansprüche, wobei die Funktionssubstanz gelöst oder emulgiert vorliegt.

4.  Verfahren gemäß einem der vorgehenden Ansprüche, wobei die Formgebung durch die Extrusion einer cellulosehaltigen Spinnlösung durch eine Extrusionsdüse erfolgt.

5.  Verfahren gemäß einem der vorgehenden Ansprüche, wobei das Einbringen zwischen dem Austritt des Celluloseformkörpers aus dem Fällbad und der Trocknung erfolgt.

6.  Verfahren gemäß einem der vorgehenden Ansprüche, wobei das Einbringen nach einem Lösungsmittelaustausch erfolgt.

7.  Verfahren gemäß einem der vorgehenden Ansprüche, wobei der Celluloseformkörper nach dem Einbringen der Funktionssubstanz gedämpft wird.

8.  Celluloseformkörper enthaltend eine Funktionssubstanz, erhältlich durch ein Verfahren nach einem der Ansprüche 1 bis 7.

9. Celluloseformkörper nach Anspruch 8, **dadurch gekennzeichnet, dass** die Konzentration der Funktionssubstanz eine stetige, nicht-konstante Verteilung mit Minimum in der Mitte des Formkörpers aufweist.

10. Celluloseformkörper nach Anspruch 8 und 9, **dadurch gekennzeichnet, dass** die Funktionssubstanz ausgewählt ist aus der Stoffgruppe bestehend aus

> a. Hydrophoben (lipophilen) Stoffen mit niedrigem oder hohem Molekulargewicht, insbesondere Ölen wie Olivenöl, Traubenkernöl, Sesamöl, Leinöl, Fetten wie Kokosfett, Paraffinen und andere Kohlenwasserstoffen, Wachsen wie Wollwachs und seinen Derivaten, Bienenwachs, Carnaubawachs, Jojobaöl, Harzen wie Schellack , Ölen, Fetten und Wachsen, die als Träger für fettlösliche Wirkstoffe dienen, insbesondere für hautpflegende Vitamine, Ceramide, flammhemmenden Stoffe, die in organischen Lösungsmitteln löslich oder emulgierbar sind, Farbstoffen, die in speziellen Lösungsmitteln löslich sind, beispielsweise die sogenannten "High-Visibility"-Farbstoffe, Insektiziden, insbesondere Pyrethroide wie Permethrin,
> b. Hydrophilen, ungeladenen Polymeren, insbesondere neutralen Polysacchariden, insbesondere Xylan, Mannan, Stärke und deren Derivate,
> c. Anionischen Polymeren, insbesondere Polyacrylsäure, Polymethacrylsäure,
> d. Polysacchariden mit anionischen Gruppen wie Polygalacturonate (Pectin), Carrageenan, Hyaluronsäure,
> e. Anionischen Derivaten von neutralen Polymeren,
> f. Kationischen Polymeren, insbesondere polyDADMAC, Polyaminosäuren, kationische Derivate von neutralen Polymeren, insbesondere kationisierte Stärken,
> g. Proteinen, insbesondere Strukturproteinen wie Gelatine, Collagen, Milchproteine (Caseine, Molkeproteine), Enzymen oder funktionellen Proteinen,
> h. Kombinationen von komplexen Naturstoffen, wie Aloe vera, Traubenkernextrakt oder-öl, antioxidanten Gemischen pflanzlichen Ursprungs, etherischen Ölen oder Ginseng.

11. Celluloseformkörper gemäß einem der vorgehenden Ansprüche 8 bis 10, wobei der Celluloseformkörper eine Faser, eine Folie, ein Granulat, ein Pulver, ein Fibrid, ein Spinnvlies, Schwamm, Aerogel oder Hydrogel ist.

12. Verwendung von Formkörpern nach einem der vorgehenden Ansprüche zur Herstellung von Garnen, Textilien, Gelen oder Verbundwerkstoffen.

13. Verwendung von Formkörpern nach einem der vorgehenden Ansprüche zur Herstellung von kosmetischen Produkten, medizinischen Produkten, flammhemmenden Produkten oder gefärbten, insbesondere High-Visibilitygefärbten Produkten.

## Claims

1. A method for producing a cellulosic molded body, comprising the steps of:

   - molding a cellulose-containing solution
   - precipitating the molded solution
   - washing the molded body thus obtained, and
   - drying the molded body,

   **characterized in that** a functional substance is introduced into the never-dried cellulosic molded body during its production, after the molding step, while the chemical structure of the functional substance is maintained, the functional substance having an impregnating efficiency K', as defined in the description, of less than 10, preferably less than 5.

2. The method as claimed in claim 1, **characterized in that** the cellulose-containing solution is prepared according to a direct dissolving method.

3. The method as claimed in any of the preceding claims, wherein the functional substance is present in a dissolved or emulsified state.

**4.** The method as claimed in any of the preceding claims, wherein molding is carried out by extruding a cellulose-containing spinning solution through an extrusion die.

**5.** The method as claimed in any of the preceding claims, wherein introducing takes place between discharging the cellulosic molded body from the precipitating bath and drying.

**6.** The method as claimed in any of the preceding claims, wherein introducing takes place after a solvent exchange.

**7.** The method as claimed in any of the preceding claims, wherein the cellulosic molded body is treated with steam after the introduction of the functional substance.

**8.** A cellulosic molded body containing a functional substance, which can be obtained by a method as claimed in any of claims 1 to 7.

**9.** The cellulosic molded body as claimed in claim 8, **characterized in that** the concentration of the functional substance exhibits a continuous, non-constant distribution with its minimum in the center of the molded body.

**10.** The cellulosic molded body as claimed in claims 8 and 9, **characterized in that** the functional substance is selected from the group of substances consisting of

a. hydrophobic (lipophilic) substances having a low or high molecular weight, particularly oils such as olive oil, grapeseed oil, sesame oil, linseed oil, fats such as coconut fat, paraffins, and other hydrocarbons, waxes such as wool wax and its derivatives, beeswax, carnauba wax, Jojoba oil, resins such as shellac, oils, fats, and waxes serving as substrates for fat-soluble active ingredients, especially for skin care vitamins, ceramides, flame-retardant substances which are soluble or emulsifiable in organic solvents, dyes which are soluble in special solvents, for example, the so-called high visibility dyes, insecticides, particularly pyrethroids such as permethrine,
b. hydrophilic, uncharged polymers, particularly neutral polysaccharides, particularly xylan, mannan, starch, and its derivatives,
c. anionic polymers, particularly polyacrylic acid, polymethacrylic acid,
d. polysaccharides having anionic groups such as polygalacturonates (pectin), carrageenan, hyaluronic acid,
e. anionic derivatives of neutral polymers,
f. cationic polymers, particularly polyDADMAC, polyamino acids, cationic derivatives of neutral polymers, particularly, cationized starches,
g. proteins, particularly structural proteins such as gelatin, collagen, milk proteins (caseins, whey proteins), enzymes, or functional proteins,
h. combinations of complex natural substances such as aloe vera, grapeseed extract or oil, antioxidant mixtures of plant origin, etheric oils, or ginseng.

**11.** The cellulosic molded body as claimed in any of the preceding claims 8 to 10, wherein the cellulosic molded body is a fiber, a film, a granular material, a powder, a fibrid, a spunbonded fabric, a sponge, an aerogel, or a hydrogel.

**12.** The use of molded bodies as claimed in any of the preceding claims for the production of yarns, textiles, gels, or composite materials.

**13.** The use of molded bodies as claimed in any of the preceding claims for the production of cosmetic products, medicinal products, flame-retardant products, or dyed, particularly high-visibility-dyed, products.

**Revendications**

**1.** Procédé de fabrication d'un corps moulé cellulosique comprenant les étapes suivantes :

- moulage d'une solution cellulosique
- précipitation de la solution moulée
- nettoyage du corps moulé ainsi obtenu et
- séchage du corps moulé,

**caractérisé en ce qu'**une substance fonctionnelle est introduite dans le corps moulé cellulosique jamais séché, au cours de la réalisation de celui-ci et après moulage, tout en conservant la structure chimique de la substance fonctionnelle, la substance fonctionnelle présentant un rendement d'imprégnation K' tel que défini dans la description qui soit inférieur à 10, de préférence inférieur à 5.

2. Procédé selon la revendication 1, **caractérisé en ce que** la solution cellulosique est fabriquée selon un procédé de dissolution direct.

3. Procédé selon l'une des revendications précédentes, la substance fonctionnelle étant à disposition sous forme dissoute ou émulsifiée.

4. Procédé selon l'une des revendications précédentes, le moulage se faisant par extrusion d'une solution à filer cellulosique par une filière d'extrusion.

5. Procédé selon l'une des revendications précédentes, l'introduction ayant lieu entre la sortie du corps moulé cellulosique du bain de précipitation et le séchage.

6. Procédé selon l'une des revendications précédentes, l'introduction ayant lieu après un échange de solvant.

7. Procédé selon l'une des revendications précédentes, le corps moulé cellulosique étant étuvé après introduction de la substance fonctionnelle.

8. Corps moulé cellulosique contenant une substance fonctionnelle pouvant être obtenu par un procédé selon l'une des revendications 1 à 7.

9. Corps moulé cellulosique selon la revendication 8, **caractérisé en ce que** la concentration de la substance fonctionnelle présente une répartition continue non constante, avec un minimum au centre du corps moulé.

10. Corps moulé cellulosique selon les revendications 8 et 9, **caractérisé en ce que** la substance fonctionnelle est sélectionnée parmi le groupe de substances comprenant

    a. des substances hydrophobes (lipophiles) de masse moléculaire faible ou élevée, en particulier des huiles comme l'huile d'olive, l'huile de pépins de raisin, l'huile de sésame, l'huile de lin, des graisses comme la graisse de coco, des paraffines et autres hydrocarbures, des cires comme la lanoline et ses dérivés, la cire d'abeille, la cire de carnauba, de l'huile de jojoba, des résines comme la gomme laque, des huiles, graisses et cires servant de support à des principes actifs liposolubles, en particulier à des vitamines de soin pour la peau, des céramides et des substances ignifuges solubles ou émulsionnables dans des solvants organiques, des colorants solubles dans des solvants spéciaux, par exemple des colorants dits « haute visibilité », des insecticides, en particulier des pyréthroïdes comme la permethrine,
    b. des substances hydrophiles, des polymères non chargés, en particulier des polysaccharides neutres, en particulier du xylane, du mannane, de la fécule et ses dérivés,
    c. des polymères anioniques, en particulier de l'acide polyacrylique, de l'acide polyméthacrylique,
    d. des polysaccharides avec des groupes anioniques comme les polygalacturonates (pectine), la carraghénine, l'acide hyaluronique,
    e. des dérivés anioniques de polymères neutres,
    f. des polymères cationiques, en particulier du polyDADMAC, des acides polyaminés, des dérivés cationiques de polymères neutres, en particulier des fécules cationiques,
    g. des protéines, en particulier des protéines structurales comme la gélatine, le collagène, les protéines de lait (caséines, protéines de lactosérum), des enzymes ou des protéines fonctionnelles,
    h. des combinaisons de substances naturelles complexes comme l'aloe vera, l'extrait ou l'huile de pépins de raison, des mélanges antioxydants d'origine végétale, des huiles essentielles ou du ginseng.

11. Corps moulé cellulosique selon l'une des revendications précédentes 8 à 10, le corps moulé cellulosique étant une fibre, un film, un granulé, une poudre, un fibride, une nappe non-tissée, une éponge, un aérogel ou un hydrogel.

12. Utilisation de corps moulés selon l'une des revendications précédentes pour la fabrication de fils, de textiles, de gels ou de matériaux composites.

13. Utilisation de corps moulés selon l'une des revendications précédentes pour la fabrication de produits cosmétiques, de produits médicaux, de produits ignifuges ou de produits teints, en particulier teints avec des colorants haute visibilité.

Fig. 1a

Fig. 1b

Fig. 1c

Fig. 1d

Fig. 2a

50 µm

Fig. 2b

50 µm

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7052775 B
- EP 1658395 A
- JP 2008303245 A
- WO 2004081279 A
- GB 1144048 A
- WO 2002044278 A
- JP 2001003224 B
- EP 0878133 A
- DE 1692203
- AT 007617 U1
- WO 9707266 A
- EP 2062922 A1
- WO 2004007818 A
- WO 2009092121 A
- WO 2009036480 A1
- WO 2009036479 A1
- WO 9319230 A
- WO 2009036480 A

**In der Beschreibung aufgeführte Nicht-Patentliteratur**

- **MANIAN, A.P. ; RÜF, H ; BECHTOLD, T.** Spun-Dyed Lyocell. *Dyes and Pigments,* 2007, vol. 74, 519-524
- **WENDLER F. ; MEISTER F. ; HEINZE T.** Studies on the Thermostability of Modified Lyocell Dopes. *Macromolecular Symposia,* 2005, vol. 223 (1), 213-224
- **YOKOTA, SHINGO ; KITAOKA, TAKUYA ; WARIISHI, HIROYUKI.** Surface morphology of cellulose films prepared by spin coating on silicon oxide substrates pretreated with cationic polyelectrolyte. *Applied Surface Science,* 2007, vol. 253 (9), 4208-4214
- **NECHWATAL, A. ; MICHELS, C. ; KOSAN, B. ; NICOLAI, M.** Lyocell blend fibers with cationic starch: potential and properties. *Cellulose,* 2004, vol. 11 (2), 265-272
- **ZOLLINGER, H.** Color Chemistry. Verlag Chemie, 1991
- **A. KONGDEE ; T. BECHTOLD ; L. TEUFEL.** Modification of cellulose fiber with silk sericin. *Journal of Applied Polymer Science,* 2005, vol. 96, 1421-1428
- **WEIGEL, P. ; FINK, H. P. ; WALENTA, E. ; GANSTER, J. ; REMDE, H.** Structure formation of cellulose man-made fibers from amine oxide solution. *Cellul. Chem. Technol.,* 1997, vol. 31, 321-333
- **FINK, HP ; WEIGEL, P ; PURZ, H.** Structure formation of regenerated cellulose materials from NMMO solutions. *Prog. Polym. Sci.,* 2001, vol. 26, 1473
- **VICKERS, M ; NP BRIGGS ; RI IBBETT ; JJ PAYNE ; SB SMITH.** Small-angle X-ray scattering studies on Lyocell fibers. *Polymer,* 2001, vol. 42, 8241-8242
- **WEI, M. ; YANG, G. et al.** *Holzforschung,* 2009, vol. 63, 23-27
- **VICKERS et al.** FWHM, Peakverbreiterung in der Röntgenkleinwinkelstreuung (full width at half maximum). *Maß für die Orientierung,* 2001
- **ROHRER, C. ; RETZL, P. ; FIRGO, H. ; LYOCELL LF.** profile of a fibrillation-free fiber. *Chem. Fibers Int.,* 2000, vol. 50 (552), 554-555
- **P. ALWIN ; TAYLOR J.** *Melliand Textilberichte,* 2001, vol. 82, 196
- **H. ZOLLINGER.** Color Chemistry. VCH, 1991, 275
- **YAO, L. ; TOKURA H. ; LI Y. ; NEWTON E. ; GOBEL M.D.I.** *J. Am. Acad. Dermatol.,* 2006, vol. 55, 910-912
- **LAUTENSCHLÄGER, H.** Fettstoffe - die Basis der Hautpflege. *Kosmetische Praxis,* 2003, vol. 6, 6-8
- **LAUTENSCHLÄGER, H.** Essentielle Fettsäuren-Kosmetik von innen und außen. *Beauty Forum,* 2003, vol. 4, 54-56
- **KUGLER, H.-G.** UV Schutz der Haut. *CO-Med,* 2006, vol. 3, 1-2
- **LAUTENSCHLÄGER, H.** Radikalfänger - Wirkstoffe im Umbruch. *Kosmetische Praxis,* 2006, vol. 2, 12-14
- **KUGLER, H.-G.** Stress und Mikronährstoffe. *Naturheilkunde,* 2007, vol. 2
- **GÖTZE.** Chemiefasern nach dem Viscoseverfahren. Springer, 1967